(19) **Europäisches Patentamt**
**European Patent Office**
**Office européen des brevets**

(11) **EP 3 702 731 A1**

(12) **EUROPEAN PATENT APPLICATION**
published in accordance with Art. 153(4) EPC

(43) Date of publication:
**02.09.2020 Bulletin 2020/36**

(21) Application number: **18871786.2**

(22) Date of filing: **26.10.2018**

(51) Int Cl.:
***G01C 21/20*** *(2006.01)*

(86) International application number:
**PCT/CN2018/112077**

(87) International publication number:
**WO 2019/080924 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2017 CN 201711021920**

(71) Applicant: **Guangzhou Xaircraft Technology Co., Ltd.**
**Tianhe District**
**Guangzhou**
**Guangdong 510000 (CN)**

(72) Inventors:
• **ZHENG, Liqiang**
  **Guangzhou, Guangdong 510000 (CN)**
• **LIU, Peng**
  **Guangzhou, Guangdong 510000 (CN)**

(74) Representative: **HGF**
**1 City Walk**
**Leeds LS11 9DX (GB)**

(54) **METHOD FOR CONFIGURING NAVIGATION CHART, OBSTACLE AVOIDANCE METHOD AND DEVICE, TERMINAL, UNMANNED AERIAL VEHICLE**

(57)    A method for configuring navigation chart is provided. The method may include: acquiring a current flight position, posture information and a depth image detected at the current flight position of an unmanned aerial vehicle (S110); acquiring three-dimensional position information of each point according to the current flight position, the posture information and the depth image (S120); and projecting the three-dimensional position information of the each point into a local navigation chart taking the current flight position as a center according to a weight that is set respectively (S130). An automatic obstacle avoidance method, an automatic obstacle avoidance apparatus, a terminal and the unmanned aerial vehicle (800) are further provided.

a current flight position, posture information and a depth image detected at the current flight position of an aerial vehicle are acquired — S110

three-dimensional position information of each point is acquired according to the current flight position, the posture information and the depth image — S120

the three-dimensional position information of the each point is projected into a local navigation chart taking the current flight position as a center according to a weight that is set respectively — S130

**Fig. 1**

EP 3 702 731 A1

**Description**

**Technical Field**

The embodiments of the present disclosure relate to the technical field of aerial vehicles, and in particular to a method for configuring navigation chart, an automatic obstacle avoidance method, an automatic obstacle avoidance apparatus and a terminal.

**Background**

With the development of technology, an aerial vehicle, for example, an unmanned aerial vehicle and the like, has been widely applied to the fields as aerial photography, agriculture, plant protection, micro autodyne, express transportation, disaster rescuing, wildlife observation, infectious diseases surveillance and control, surveying and mapping, news reporting, power inspection, disaster relief and movie and television photography.

In a traditional technology, an operating route of the aerial vehicle is a scan route automatically generated by a ground control apparatus in advance according to block information. Because the scan route is generated in advance, and a return path after an operation is generated before takeoff, there is no way to cope with a temporary task change. For example, when the aerial vehicle operates according to the scan route generated in advance, a user requires the aerial vehicle to implement the operation at the same time for an operating area where the operating route is not planned in advance; or, when the aerial vehicle implements the operation according to the scan route generated in advance, the user requires the aerial vehicle to automatically avoid an unknown obstacle which is not planned in advance, and so on.

**Summary**

In allusion to a shortcoming of an existing mode, the disclosure provides a navigation chart configuration method, an obstacle avoidance method, an obstacle avoidance apparatus and a terminal, as to solve the problem that an operating route planning method in the conventional art may not cope with a temporary task change. In this way, an operating route may be generated dynamically, as to accordingly cope with the temporary task change effectively.

According to a first aspect, an embodiment of the disclosure provides a method for configuring navigation chart. The method may include the following steps.

A current flight position, posture information and a depth image detected at the current flight position of an aerial vehicle are acquired.

Three-dimensional position information of each point is acquired according to the current flight position, the posture information and the depth image.

The three-dimensional position information of the each point is projected into a local navigation chart taking the current flight position as a center according to a weight that is set respectively.

According to a second aspect, an embodiment of the disclosure further provides an obstacle avoidance method. The method may include the following steps.

A current flight position, posture information and a depth image detected at the current flight position of an aerial vehicle are acquired.

Three-dimensional position information of each point is acquired according to the current flight position, the posture information and the depth image.

The three-dimensional position information of the each point is projected into a local navigation chart taking the current flight position as a center according to a weight that is set respectively, herein, the local navigation chart may include multiple sub-areas.

If a weight sum of all points in the sub-area is greater than a preset threshold, the sub-area is configured as an obstacle area, as to indicate the aerial vehicle to avoid an obstacle of the obstacle area.

Surveying and mapping data set by a user and used to indicate the obstacle area and an operating boundary area, and three-dimensional position information used to indicate the obstacle area in the local navigation chart are acquired.

The obstacle area and the operating boundary area are configured in a preset global navigation chart, as to indicate the aerial vehicle to avoid the obstacles of the obstacle area and the operating boundary area.

According to a third aspect, an embodiment of the disclosure further provides a apparatus for configuring navigation of an aerial vehicle, including an information acquisition component, a three-dimensional position information acquisition component and a projecting component.

The information acquisition component is configured to acquire a current flight position, posture information and a depth image detected at the current flight position of an aerial vehicle.

The three-dimensional position information acquisition component is configured to acquire three-dimensional position information of each point according to the current flight position, the posture information and the depth image.

The projecting component is configured to project the three-dimensional position information of the each point into a local navigation chart taking the current flight position as a center according to a weight that is set respectively.

According to a fourth aspect, an embodiment of the disclosure further provides an obstacle avoidance apparatus, including a first information acquisition component, a three-dimensional position information acquisition component and a projecting component.

The first information acquisition component is configured to acquire a current flight position, posture information and a depth image detected at the current flight position of an aerial vehicle.

The three-dimensional position information acquisition component is configured to acquire three-dimensional position information of each point according to the current flight position, the posture information and the depth image.

The projecting component is configured to project the three-dimensional position information of the each point into a local navigation chart taking the current flight position as a center according to a weight that is set respectively, herein, the local navigation chart may include multiple sub-areas.

A first area configuration component is configured, when a weight sum of all points in the sub-area is greater than a preset threshold, to configure the sub-area as an obstacle area, as to indicate the aerial vehicle to avoid an obstacle of the obstacle area

A second information acquisition component is configured to acquire surveying and mapping data set by a user and used to indicate the obstacle area and an operating boundary area, and three-dimensional position information used to indicate the obstacle area in the local navigation chart.

A second area configuration component is configured to configure the obstacle area and the operating boundary area in a preset global navigation chart, as to indicate the aerial vehicle to avoid the obstacles of the obstacle area and the operating boundary area.

According to a fifth aspect, an embodiment of the disclosure further provides a terminal, including a memory, a processor and a computer program stored on the memory and capable of running on the processor. The processor implements steps of the method in any embodiment when implementing the program.

According to a sixth aspect, an embodiment of the disclosure further provides a terminal, including a memory, a processor and a computer program stored on the memory and capable of running on the processor. The processor implements steps of the method in any embodiments when implementing the program.

According to a seventh aspect, an embodiment of the disclosure further provides a storage medium. The storage medium may include a stored program, herein, a device where the storage medium is located is controlled to implement the method for configuring navigation chart in the abovementioned first aspect when the program runs.

According to an eighth aspect, an embodiment of the disclosure further provides a storage medium. The storage medium may include a stored program, herein, a device where the storage medium is located is controlled to implement the obstacle avoidance method in the abovementioned second aspect when the program runs.

According to a ninth aspect, an embodiment of the disclosure further provides an unmanned aerial vehicle, including a communication component, a sensor, a controller and a storage medium. The sensor may include an image sensor, a Global Positioning System (GPS) receiver, a Real-Time Kinematic (RTK) positioning sensor and an inertial sensor.

The communication component is configured to communicate with a ground control apparatus.

The GPS receiver and the positioning sensor are configured to determine a current flight position of the unmanned aerial vehicle.

The inertial sensor is configured to determine posture information of the unmanned aerial vehicle.

The image sensor is configured to detect a depth image at the current flight position.

The controller is connected with the storage medium, and the storage medium is configured as a storage program which implements steps of the method in the abovementioned first aspect when the program runs.

According to a tenth aspect, an embodiment of the disclosure further provides an unmanned aerial vehicle, including a communication component, a sensor, a controller and a storage medium. The sensor may include an image sensor, a Global Positioning System (GPS) receiver, a Real-Time Kinematic (RTK) positioning sensor and an inertial sensor.

The communication component is configured to communicate with a ground control apparatus.

The GPS receiver and the positioning sensor are configured to determine a current flight position of the unmanned aerial vehicle.

The inertial sensor is configured to determine posture information of the unmanned aerial vehicle.

The image sensor is configured to detect a depth image at the current flight position.

The controller is connected with the storage medium, and the storage medium is configured as a storage program which implements steps of the method in the abovementioned second aspect when the program runs.

The abovementioned navigation chart configuration method, the automatic obstacle avoidance method, the automatic obstacle avoidance apparatus and the terminal dynamically generate the local navigation chart taking the current flight position of the aerial vehicle as the center and analyze the three-dimensional position information of the each point according to the position information, the posture information and the depth image acquired by the aerial vehicle during flying. The three-dimensional position information of the each point may be the information of the unknown obstacle that the aerial vehicle meets during flying, or the information of other objects that the aerial vehicle meets during flying and is not planned in advance. The operating route may be planned in real time according to the local navigation chart when the three-dimensional position information of the each point is projected into the local navigation image. Because the operating route is dynamically generated according to the information acquired by the aerial vehicle during flying, the temporary task change may be effectively coped. For example, the operations may be implemented at the same time for one operating area to which the operating route is not planned in advance, or the obstacle of the area where the unknown obstacle is located may be avoided automatically, and so on.

## Brief Description of the Drawings

The abovementioned and/or additional aspects and advantages of the disclosure will become apparent and readily understood from the description of embodiments below in combination with accompanying drawings. In the drawings:

Fig. 1 is a process diagram of an embodiment of a method for configuring navigation chart of the disclosure.
Fig. 2 is a schematic diagram of a specific embodiment of a preset area determination method of the disclosure.
Fig. 3 is a structure diagram of an embodiment of a apparatus for configuring navigation of an aerial vehicle of the disclosure.
Fig. 4 is a process diagram of an embodiment of an obstacle avoidance method of the disclosure.
Fig. 5 is a schematic diagram of a specific embodiment of a global navigation chart boundary acquisition mode of the disclosure.
Fig. 6 is a schematic diagram of a specific embodiment of configuring an obstacle area and an operating boundary area in a global navigation chart of the disclosure.
Fig. 7 is a structure diagram of an embodiment of an obstacle avoidance apparatus of the disclosure.
Fig. 8 is a structure diagram of an unmanned aerial vehicle 800 of an embodiment of the disclosure.

## Detailed Description of the Embodiments

Embodiments of the disclosure are described below in detail, and examples of the embodiments are illustrated in drawings. Herein the same or similar reference numerals are used to refer to the same or similar elements or elements having the same or similar functions. The embodiments described below with reference to the drawings are illustrative of the disclosure only and are not to be construed as limitation on the disclosure.

Those skilled in the art may understand, unless specifically stated, that a singular form, such as "a", "one", "the" and "said" used here, may include a plural form as well. It is to be further understood that diction "include" used in the description of the disclosure is defined that there are the features, integers, steps, operations, elements and/or subassemblies. However, existence or addition of one or more other characteristics, integers, steps, operations, elements, subassemblies and/or their combinations may not be excluded.

Those skilled in the art should understand, unless otherwise defined, that the terms used here (including technical terms and scientific terms) have significances identical with those of general understandings of those of ordinary skill in the art in the field to which the disclosure belongs. It is to be further understood that those terms defined, for example, in a general dictionary should be understood to have the significances consistent with those in a context in the conventional art. In addition, unless specifically defined here, these terms will not be construed with idealized or overly official meanings.

In order to better understand the disclosure, an overall technical concept of the disclosure is briefly introduced first.

An obstacle avoidance system of an aerial vehicle designed in the disclosure may include two parts, one of which is a global obstacle avoidance planning part mainly based on a global navigation chart, and another of which is a local obstacle avoidance planning part mainly based on a local navigation chart. The global navigation chart and the local navigation chart are used to indicate flight of the aerial vehicle, herein, establishment of the global navigation chart and establishment of the local navigation chart are independent of each other, problems that may occur during the establishment and establishment strategies (which will be introduced below in detail) are different, with a purpose of reducing resource consumption and fitting application in agriculture.

Global obstacle avoidance planning is used in a return flight or used to guide a flight. The global navigation chart is mainly used to face a known obstacle. During the application of the aerial vehicle, such as plant protection with an agricultural aerial vehicle, an operating route is a scan route automatically generated by a ground station in advance according to block information. Because the scan route is generated in advance, and a return path after an operation is generated before takeoff, there is no way to cope with a temporary task change, for example, a farm chemical is suddenly used up, electricity is almost used up, or a user suddenly wants to return rather than fly. The global navigation chart is used to cope with such a scenario, and accordingly plan an obstacle-free path in an entire map at any time. The planning is a long-distance planning, and spraying and other problems are not needed to be considered. In the scenario, a map area needs to be large, and a map granularity does not need to be very fine. The map area may be determined before takeoff.

Local obstacle avoidance planning is used in flight along the operating route or used under a situation that the aerial vehicle meets an unknown obstacle during flying along a path globally planned. The local navigation chart is mainly used in a scenario that the aerial vehicle meets an unknown obstacle during operations. In the scenario, the map granularity needs to be small because the original route needs to be fit as far as possible, as to reduce missed spraying as far as possible. Thus, the corresponding planning is of short-distance generally. The map may be very small, and a center of the map needs to move with the aerial vehicle.

In addition, besides application to obstacle avoidance, the local navigation chart designed by the embodiments of the disclosure may further be applied to other aspects, for example, operations of a fruit tree area that is not planned in advance, and the like. The embodiments of the disclosure are not intended to define the scenario where the local navigation chart is applied.

Based on the abovementioned technical concept, specific embodiments of a method for configuring navigation chart, an automatic obstacle avoidance method, an automatic obstacle avoidance apparatus and a terminal provided by the application will be introduced below in detail.

First, the application is introduced in detail from a perspective based on local navigation chart planning.

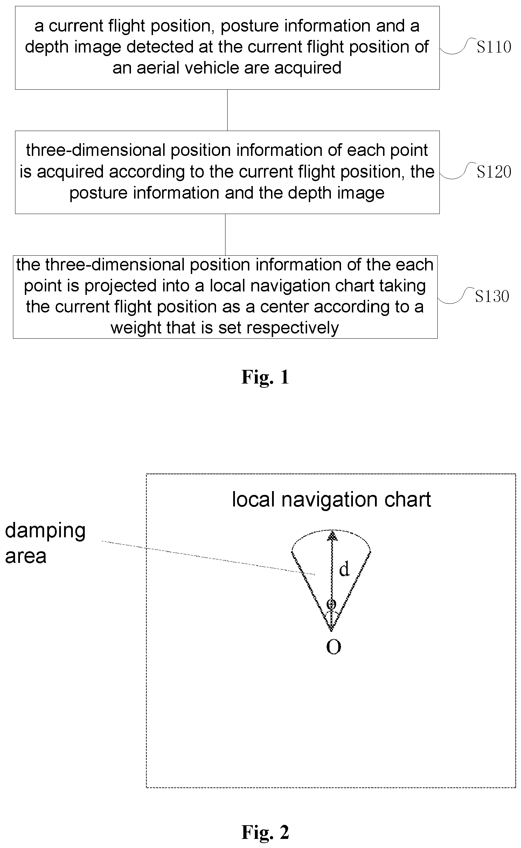

As shown in Fig. 1, in an embodiment, a method for configuring navigation chart may include the following steps.

S110, a current flight position, posture information and a depth image detected at the current flight position of an aerial vehicle are acquired.

The aerial vehicle may be an unmanned aerial vehicle for plant protection, and the like. The current flight position is defined as a geographical position of the aerial vehicle at a current moment, such as longitude and latitude information of the aerial vehicle. The posture information is defined as a flight posture of the aerial vehicle at the current moment, such as a pitching angle, a roll angle and a yaw angle. Both the current flight position and the posture information of the aerial vehicle may be acquired through flight control of the aerial vehicle. The depth image is a two-dimensional image of a shot target and may include distance information of each point and the current flight position, namely, a gray value of each pixel in the depth image is used to characterize the distance information of the shot target and a current position of the aerial vehicle. During practical application, the depth image may be detected through a binocular system of the aerial vehicle. During local obstacle avoidance, multiple depth images or single depth image may be used, and the disclosure is not intended to define. In addition, a size of the depth image may be set voluntarily as needed, and the disclosure is not intended to define as well, for example, the detected depth image is a 640*480 image. The acquired current flight position, the acquired posture information and the acquired depth image are used to establish a local navigation chart.

S120, three-dimensional position information of each point is acquired according to the current flight position, the posture information and the depth image.

Because the gray value of the each pixel in the depth image may include the distance information of the shot target and the aerial vehicle, the three-dimensional position information corresponding to the each pixel may be calculated according to the current flight position, the posture information, and a pixel coordinate and the gray value of the each pixel in the depth image, namely, each two-dimensional pixel in the depth image may acquire a three-dimensional point correspondingly.

A navigation coordinate system, namely, a local horizontal coordinate system, is the coordinate system selected as a navigation reference during navigation according to the need of a navigation system, and used for navigation calculation. In view of that these three-dimensional points are applied to the navigation of the aerial vehicle, the calculated three-dimensional point is defined as the point under the navigation coordinate system generally. Optionally, the navigation coordinate system is a North East Down (NED) coordinate system.

Because the local navigation map needs to indicate an obstacle near the aerial vehicle only, while an acquired point cloud (each three-dimensional point) may include a distant point, a point affecting flight of the aerial vehicle may be retained only, for example, a point within a certain range above or below the aerial vehicle is retained only.

S130, the three-dimensional position information of the each point is projected into a local navigation chart taking the current flight position as a center according to a weight that is set respectively.

The local navigation chart is used for local navigation of the aerial vehicle and is dynamic. A center of a map is the current position of the aerial vehicle, and a size thereof may be set in advance manually or through a program. When the current position of the aerial vehicle is changed, the center of the local navigation chart may move; meanwhile, a content of the whole map may be subjected to translation for one time. After translation, an original content outside the map may be deleted, and a new content may be reset.

The local navigation chart is a two-dimensional map. After the point cloud, namely, the point cloud of the navigation coordinate system is acquired, these point clouds need to be superposed into the local navigation chart with a certain weight, as to dynamically plan an operating route. There are many modes to calculate a weight of the each point. For example, in an embodiment, the weight of the each point is acquired according to a multiply of a preset weight and a distance factor, herein, the distance factor is in direct proportion to the distance information, namely, as shown in the following formula:

$$point\_weight = point\_weight\_com * distance\_factor$$

where point_weight is the weight of the point, point_weight_com is a general weight of the point, namely, the preset weight which may be acquired according to experience, and the general weight is consistent as for each of all points; distance_factor is a factor concerning a distance and is in direct proportion to the distance, namely, a value thereof may be linearly increased along increasing of the distance information, and linearly reduced along reduction of the distance information. The distance information is the one characterized by the gray value of the each pixel in the abovementioned depth image. The distance factor is in direct proportion to the distance information because a distant object has less point clouds. Therefore, the weight of the each point should be greater than that of a nearby point.

After acquiring an updated local navigation chart according to S130, operating route planning may be implemented according to the local navigation chart, for example, obstacle avoidance, an operation of a newly detected area, and the like. In order to better understand the disclosure, the obstacle avoidance based on the local navigation chart will be taken as an example to introduce below in detail.

In an embodiment, the local navigation chart may include multiple sub-areas. After the three-dimensional position information of the each point is projected into the local navigation chart taking the current flight position as the center according to the weight that is set respectively, the method may further include: if a weight sum of all points in the sub-area is greater than a preset threshold, the sub-area is configured as an obstacle area, as to indicate the aerial vehicle to avoid the obstacle.

The local navigation chart is divided into multiple sub-areas according to a certain rule, and a specific division rule may be set according to actual conditions, and the disclosure is not intended to define. For example, in an embodiment, the local navigation chart may be a grille map, and each grille is one sub-area.

Because the acquired point may be an obstacle point, or a noise point and the like, the weights of these points need to be further calculated, as to acquire an actual obstacle area. After the each point is superposed into the local navigation chart according to the weight, each sub-area in the local navigation chart may include multiple points, and a total weight of the each sub-area may be acquired through calculating the total weight of the each sub-area according to the following formula.

$$map\_value += point\_weight,$$

where map_value represents the weight of one sub-area.

The preset threshold is set according to experience, for example, the preset threshold is set to 1. In addition, a specific form indicating the obstacle area needs to be configured according to the actual need. For example, as for the grille map, a weight 0 of the grille represents that the position is a free position, and the aerial vehicle may fly freely, while the weight 1 of the grille represents that there is the obstacle at the position, and the aerial vehicle needs to fly around. Then the sub-area may be configured according to the following formula:

$$If\ (map\_value > 1)\ then\ map\_value = 1.$$

In an embodiment, after the three-dimensional position information of the each point is projected into the local navigation chart taking the current flight position as the center according to the weight that is set respectively, the method may further include: if the weight sum of the all points in the sub-area is less than or equal to the preset threshold, the sub-area is configured as a passage area, as to allow the aerial vehicle to fly across. If the total weight of the sub-area is less than or equal to the preset threshold, it means that the sub-area is not the real obstacle area. Therefore, the sub-area may be marked as the passage area. For example, as for the grille map, if the weight sum of the all points within one grille is less than 1, the weight of the grille may be set to 0, as to indicate that the aerial vehicle may fly across.

Because the each pixel of the depth image may include the distance information of the target and an amount of information therein is too great, an amount of computation may be too great if the three-dimensional position information of the each point is acquired according to an original depth image. Therefore, the depth image needs to be preprocessed. There are many modes to preprocess the depth image to reduce the amount of computation. For example, in an embodiment, after the current flight position, the posture information and the depth image detected at the current flight position of the aerial vehicle are acquired and before the three-dimensional position information of the each point is acquired, the method may further include: sparse processing is implemented for the depth image.

According to a pin-hole imaging mode of a camera, distant obstacles may be centralized at a center of the image, while there may be a big area of nearby obstacles in the image because of a short distance. Therefore, in an embodiment, the step that the sparse processing is implemented for the depth image may include: the sparse processing is implemented for the depth image with a variable step size, herein, the variable step size is used to control gradual increasing of the pixels in the depth image from an edge to the center.

During specific implementation, un-equidistant sparse processing may be implemented from an image boundary, in this way the pixels close to the center of the image are dense, while the pixels on the edge of the image are sparse. A pseudo-code of the sparse processing is shown below:

```
for(i=0; i<img_height; i+=i_step);
    i_step = fabs(i-img_height/2) / height_step + 1
    for(j=0; j<img_width; j+=j_step);
        j_step = fabs(j-img_width/2) / width_step + 1
        HandleImage()
    end
end
```

where,

img_height and img_width are width and length of the image, respectively;
i_step and j_step are step sizes through the image, with an initial value of 1;
height_step and width_step are sparse factors in a longitudinal direction and a transverse direction of the image, respectively; and
HandleImage() represents post-processing of the depth image.

The original depth image or a sparse depth image after the sparse processing may be only converted under the navigation coordinate system through coordinate conversion, and be only updated into the local navigation chart as information of the obstacle accordingly. Therefore, in an embodiment, the step that the three-dimensional position information of the each point is acquired according to the current flight position, the posture information and the depth image may include: the coordinate conversion is implemented for the depth image, as to acquire each point in the navigation coordinate system, and the three-dimensional position information of the each point is acquired according to the each point in the navigation coordinate system, the current flight position and the posture information.

There are many modes to implement the coordinate conversion. For example, in an embodiment, the step that the coordinate conversion is implemented for the depth image, as to acquire the each point in the navigation coordinate system may include: the each point in the depth image is converted to each point under a camera coordinate system according to an internal reference matrix of the camera, the each point under the camera coordinate system is converted to each point under a machine coordinate system according to a conversion matrix $R^b{}_c$ from the camera coordinate system to the machine coordinate system, and the each point under the machine coordinate system is converted to the each point of the navigation coordinate system according to a conversion matrix $R^g{}_b$ from the machine coordinate system to the navigation coordinate system.

Because the depth image itself may have noise and the obstacle may move (for example, a leave flutters with wind), and the point cloud calculated with the depth image may have a noise point. These noises may be accumulated in the local navigation chart along looping of the abovementioned steps, thereby leading to error measurement of the obstacle, error measurement for short. In order to reduce error measurement probability, in an embodiment, after the three-dimensional position information of the each point is projected into the local navigation chart according to the weight that is set respectively, the method further include: a weight of each point in a preset area in the local navigation chart is damped, and a weight sum of all points within each sub-area after damping is acquired. The weight of the point within the preset area in the local navigation chart is damped first, then the total weight of the each sub-area is calculated, and that whether the each sub-area is the obstacle area is judged. In this way, influence of the noise to judgment of the obstacle may be reduced, and accuracy of judgment of the obstacle area may be improved.

In an embodiment, the step that the weight of the each point in the preset area in the local navigation chart is damped may include: the weight of the each point in the preset area is multiplied by a preset damping factor. The damping factor may be set according to the experience. If the preset area just includes N sub-areas, the damping may be implemented according to the following formula:

$$map\_value *= damping\_factor.$$

where map_value represents the total weight of one sub-area in the preset area, and damping_factor represents the damping factor.

There are many modes to determine the preset area. For example, in an embodiment, the preset area may be determined according to the center of the local navigation chart, a horizontal field angle of a binocular system for acquiring the depth image in the aerial vehicle and a setting damping distance.

As shown in Fig. 2, a schematic diagram of a preset area determination method of a specific embodiment is shown, herein, O represents a center of a local navigation chart, namely, a current flight position of an aerial vehicle, $\theta$ represents a field angle of a binocular system and is determined by a parameter of the binocular system, and d represents a damping distance and is a fixed value which is set according to experience. In this way, a sector area determined by the abovementioned three parameters is a damping area. A weight of a point in the damping area is damped, while a weight of a point outside the damping area does not need to be damped.

It is to be noted that Fig. 2 only shows the damping area in the aerial vehicle forwardly equipped with the binocular system. If the binocular system is mounted behind the aerial vehicle or on a side of the aerial vehicle as well, the damping area is configured at a position symmetric with the shown damping area or a position on a side of the damping area, as to damp the weight of the point in the damping area, namely, the damping area is associated with a mounting mode of the binocular system. If the depth image is acquired through other devices, the way of determining the preset area is the same as a concept of determining the preset area on the basis of the binocular system.

Based on an identical inventive concept, the embodiments of the disclosure further provide an apparatus for configuring navigation of an aerial vehicle. A specific embodiment of the apparatus of the application will be introduced below in detail in combination with drawings.

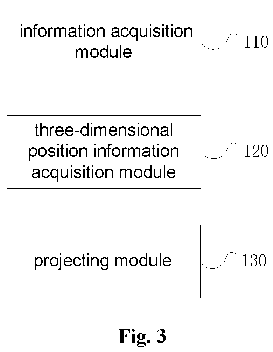

As shown in Fig. 3, in an embodiment, an apparatus for configuring navigation of an aerial vehicle may include an information acquisition component 110, a three-dimensional position information acquisition component 120 and a projecting component 130.

The information acquisition component 110 is configured to acquire a current flight position, posture information and a depth image detected at the current flight position of the aerial vehicle.

The aerial vehicle may be an unmanned aerial vehicle for plant protection, and the like. The current flight position is defined as a geographical position of the aerial vehicle at a current moment, for example, longitude and latitude information of the aerial vehicle and the like. The posture information is defined as a flight posture of the aerial vehicle at the current moment, for example, a pitching angle, a roll angle, a yaw angle and the like. Both the current flight position and the posture information of the aerial vehicle may be acquired through flight control of the aerial vehicle. The depth image is a two-dimensional image of a shot target and may include distance information of each point and the current flight position, namely, a gray value of each pixel in the depth image is used to characterize the distance information of the shot target and the current position of the aerial vehicle. During practical application, the depth image may be detected through a binocular system of the aerial vehicle. During implementing local obstacle avoidance, multiple depth images or a single depth image may be used, and the disclosure is not intended to define. In addition, a size of the depth image may be set voluntarily as needed, and the disclosure is not intended to define as well. The acquired current flight position, the acquired posture information and the acquired depth image are used to establish a local navigation chart.

The three-dimensional position information acquisition component 120 is configured to acquire three-dimensional position information of the each point according to the current flight position, the posture information and the depth image.

Because the gray value of the each pixel in the depth image may include the distance information of the shot target and the aerial vehicle, the three-dimensional position information corresponding to the each pixel may be calculated according to the current flight position, the posture information, and a pixel coordinate and the gray value of the each pixel in the depth image, namely, a three-dimensional point may be acquired corresponding to each two-dimensional pixel in the depth image.

A navigation coordinate system, namely, a local horizontal coordinate, is the coordinate system selected as a navigation reference during navigation according to the need of a navigation system, and used during navigation calculation. In view of that these three-dimensional points are applied to the navigation of the aerial vehicle, the calculated three-dimensional point is generally defined as the point under the navigation coordinate system. Optionally, the navigation coordinate system is a North East Down (NED) coordinate system.

Because the local navigation map needs to indicate an obstacle near the aerial vehicle only, while an acquired point cloud (each three-dimensional point) may include a distant point. Therefore, a point affecting flight of the aerial vehicle may be retained only, for example, a point within a certain range above or below the aerial vehicle is retained only.

The projecting component 130 is configured to project the three-dimensional position information of the each point into the local navigation chart taking the current flight position as a center according to a weight that is set respectively.

The local navigation chart is used for local navigation of the aerial vehicle and is dynamic. The center of a map is the current position of the aerial vehicle, and a size thereof may be set in advance manually or through a program. When the current position of the aerial vehicle is changed, the center of the local navigation chart may move; meanwhile a content of the whole map may be subjected to translation for one time. After translation, an original content outside the map may be deleted, while a new content may be reset.

The local navigation chart is a two-dimensional map. After the point cloud, namely, the point cloud of the navigation coordinate system is acquired, these point clouds need to be superposed into the local navigation chart with a certain weight, as to dynamically plan an operating route. There are many modes to calculate the weight of the each point. For example, in an embodiment, the weight of the each point is acquired according to a multiply of a preset weight and a distance factor, herein, the distance factor is in direct proportion to the distance information.

The projecting component 130 may implement operating route planning according to the local navigation chart after acquiring an updated local navigation chart, for example, obstacle avoidance, an operation of a newly detected area, and the like. In order to better understand the disclosure, the obstacle avoidance based on the local navigation chart will be taken as an example to introduce below in detail.

In an embodiment, the local navigation chart may include multiple sub-areas. The apparatus may further include an obstacle area configuration component connecting with the projecting component 130 and configured to configure the sub-area as an obstacle area when a weight sum of all points in the sub-area is greater than a preset threshold, as to indicate the aerial vehicle to avoid the obstacle.

The local navigation chart is divided into multiple sub-areas according to a certain rule, and a specific division rule may be set according to actual conditions, and the disclosure is not intended to define. For example, in an embodiment, the local navigation chart may be a grille map, and each grille is one sub-area.

Because the acquired point may be an obstacle point, or a noise point and the like, the weights of these points need to be further calculated, as to acquire an actual obstacle area. After the each point is superposed into the local navigation chart according to the weight, each sub-area in the local navigation chart may include multiple points, and a total weight of the each sub-area may be acquired through calculating the total weight of the each sub-area. If the total weight is greater than the preset threshold, the sub-area is configured as the obstacle area.

In an embodiment, the apparatus may further include a passage area configuration component connecting with the projecting component 130 and configured to configure the sub-area as a passage area when the weight sum of the all points in the sub-area is less than or equal to the preset threshold, as to allow the aerial vehicle to fly across. If the total weight of the sub-area is less than or equal to the preset threshold, it means that the sub-area is not the real obstacle area. Therefore, the sub-area may be marked as the passage area.

Because the each pixel of the depth image may include the distance information of the target and an amount of information therein is too great, an amount of computation may be too great if the three-dimensional position information of the each point is acquired according to an original depth image. Therefore, the depth image needs to be preprocessed. There are many modes to preprocess the depth image to reduce the amount of computation. For example, in an embodiment, the apparatus may further include a sparse processing component connected between the information acquisition component 110 and the three-dimensional position information acquisition component 120, and the sparse processing component is configured to implement the sparse processing for the depth image.

According to a pin-hole imaging mode of a camera, distant obstacles may be centralized at a center of the image, while there may be a big area of nearby obstacles in the image because of a short distance. Therefore, in an embodiment, the sparse processing component implements sparse processing for the depth image with a variable step size, herein, the variable step size is used to control gradual increasing of the pixels in the depth image from an edge to the center.

The original depth image, or a sparse depth image after the sparse processing may be only converted under the navigation coordinate system through coordinate conversion, and be only updated into the local navigation chart as information of the obstacle accordingly. Therefore, in an embodiment, the three-dimensional position information acquisition component 120 implements coordinate conversion for the depth image, as to acquire each point in the navigation coordinate system, and acquires the three-dimensional position information of the each point according to the each point in the navigation coordinate system, the current flight position and the posture information.

There are many modes to implement the coordinate conversion. For example, in an embodiment, the three-dimensional position information acquisition component 120 converts the each point in the depth image to each point under a camera coordinate system according to an internal reference matrix of the camera while converting the each point under the camera coordinate system to each point of a machine coordinate system according to a conversion matrix $R^b_c$ from the camera coordinate system to the machine coordinate system, and converting the each point under the machine coordinate system to the each point of the navigation coordinate system according to a conversion matrix $R^g_b$ from the machine coordinate system to the navigation coordinate system.

Because the depth image itself may have noise and the obstacle may move (for example, a leave flutters with wind), and the point cloud calculated with the depth image may have a noise point. These noises may be accumulated in the local navigation chart along looping of the abovementioned steps, thereby leading to error measurement of the obstacle, error measurement for short. In order to reduce error measurement probability, in an embodiment, the apparatus may further include a damping component connected between the projecting component 130 and the obstacle area configuration component (and/or passage area configuration component). The damping component is configured to damp a weight of each point in a preset area in the local navigation chart, and acquire a weight sum of all points within each sub-area after damping. The damping component damps the weight of the point within the preset area in the local navigation chart first, then calculates the total weight of the each sub-area. That whether the each sub-area is the obstacle area is judged on the basis of the total weight. In this way, influence of the noise to judgment of the obstacle may be reduced, and accuracy of judgment of the obstacle area may be improved.

In an embodiment, the damping component multiplies the weight of the each point in the preset area by a preset damping factor. The damping factor may be set according to the experience. If the preset area just includes N sub-areas, the total weight of the each sub-area may be multiplied by the damping factor, respectively.

There are many modes to determine the preset area. For example, in an embodiment, the preset area may be determined according to the center of the local navigation chart, a horizontal field angle of a binocular system for acquiring the depth image in the aerial vehicle and a setting damping distance. The damping area is associated with a mounting mode of the binocular system. If the depth image is acquired through other devices, the way of determining the preset area is the same as a concept of determining the preset area on the basis of the binocular system.

The embodiments of the disclosure further provide a terminal, which may be an aerial vehicle or other devices. The terminal may include a memory, a processor and a computer program stored on the memory and capable of running on the processor. The processor achieves steps of any of the abovementioned methods when implementing the program.

The application will be introduced below in detail from a perspective of global obstacle avoidance planning based on a global navigation chart.

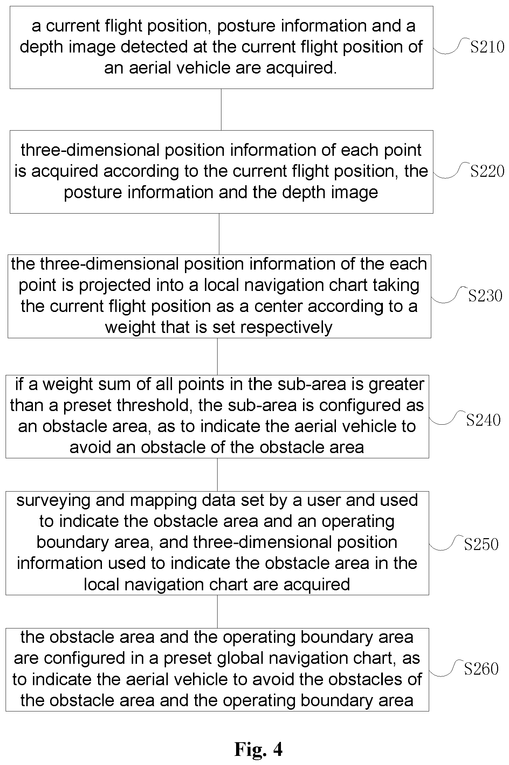

As shown in Fig. 4, in an embodiment, an obstacle avoidance method may include the following steps.

S210, a current flight position, posture information and a depth image detected at the current flight position of an aerial vehicle are acquired.

The aerial vehicle may be an unmanned aerial vehicle for plant protection and the like. The current flight position is defined as a geographical position of the aerial vehicle at a current moment, for example, longitude and latitude information of the aerial vehicle and the like. The posture information is defined as a flight posture of the aerial vehicle at the current moment, for example, a pitching angle, a roll angle, a yaw angle and the like. Both the current flight position and the posture information of the aerial vehicle may be acquired through flight control of the aerial vehicle. The depth image is a two-dimensional image of a shot target and may include distance information of each point and the current flight position, namely, a gray value of each pixel in the depth image is used to characterize the distance information of the shot target and the current position of the aerial vehicle. During practical application, the depth image may be detected through a binocular system of the aerial vehicle. During implementing local obstacle avoidance, multiple depth images or a single depth image may be used, and the disclosure is not intended to define. In addition, a size of the depth image may be set voluntarily as needed, and the disclosure is not intended to define as well, for example, the detected depth image is a 640*480 image. The acquired current flight position, the acquired posture information and the acquired depth image are used to establish a local navigation chart.

S220, three-dimensional position information of each point is acquired according to the current flight position, the posture information and the depth image.

Because the gray value of the each pixel in the depth image may include the distance information of the shot target and the aerial vehicle, the three-dimensional position information corresponding to the each pixel may be calculated according to the current flight position, the posture information, and a pixel coordinate and the gray value of the each pixel in the depth image, namely, a three-dimensional point may be acquired corresponding to each two-dimensional pixel in the depth image.

A navigation coordinate system, namely, a local horizontal coordinate, is the coordinate system selected as a navigation reference during navigation according to the need of a navigation system, and used during navigation calculation. In view of that these three-dimensional points are applied to the navigation of the aerial vehicle, the calculated three-dimensional point is generally defined as the point under the navigation coordinate system. Optionally, the navigation coordinate system is a North East Down (NED) coordinate system.

Because the local navigation map needs to indicate an obstacle near the aerial vehicle only, while an acquired point cloud (each three-dimensional point) may include a distant point, a point affecting flight of the aerial vehicle may be retained only, for example, a point within a certain range above or below the aerial vehicle is retained only.

S230, the three-dimensional position information of the each point is projected into a local navigation chart taking the current flight position as a center according to a weight that is set respectively.

The local navigation chart is used for local navigation of the aerial vehicle and is dynamic. A center of a map is the current position of the aerial vehicle, and a size thereof may be set in advance manually or through a program. When the current position of the aerial vehicle is changed, the center of the local navigation chart may move; meanwhile a content of the whole map may be subjected to translation for one time. After translation, an original content outside the map may be deleted, while a new content may be reset.

The local navigation chart is divided into multiple sub-areas according to a certain rule, and a specific division rule may be set according to actual conditions, and the disclosure is not intended to define. For example, in an embodiment, the local navigation chart may be a grille map, and each grille is one sub-area.

The local navigation chart is a two-dimensional map. After the point cloud, namely, the point cloud of the navigation coordinate system is acquired, these point clouds need to be superposed into the local navigation chart with a certain weight, as to specifically judge what areas are obstacle areas. There are many modes to calculate the weight of the each point. For example, in an embodiment, the weight of the each point is acquired according to a multiply of a preset weight and a distance factor, herein, the distance factor is in direct proportion to the distance information, namely, as shown in the following formula:

$$point\_weight = point\_weight\_com * distance\_factor$$

where point_weight is the weight of one point, point_weight_com is a general weight of the point, namely, the preset weight which may be acquired according to experience, and the general weight is consistent as for each of all points; and distance_factor is a factor concerning a distance and is in direct proportion to the distance, namely, a value thereof may be linearly increased along the increasing distance information, and linearly reduced along the reducing distance information. The distance information is the one characterized by the gray value of the each pixel in the abovementioned depth image. The distance factor is in direct proportion to the distance information because a distant object has less point clouds. Therefore, the weight of the each point should be greater than that of a nearby point.

S240, if a weight sum of all points in the sub-area is greater than a preset threshold, the sub-area is configured as an obstacle area, as to indicate the aerial vehicle to avoid an obstacle of the obstacle area.

Because the acquired point may be an obstacle point, or a noise point and the like, the weights of these points need to be further calculated, as to acquire an actual obstacle area. After the each point is superposed into the local navigation chart according to the weight, each sub-area in the local navigation chart may include multiple points, and a total weight of the each sub-area may be acquired through calculating the total weight of the each sub-area according to the following formula.

$$map\_value + = point\_weight,$$

where map_value represents the weight of one sub-area.

The preset threshold is set according to the experience, for example, the preset threshold is set to 1. In addition, a specific form indicating the obstacle area needs to be configured according to the actual need, for example, as for the grille map, if the weight of a grille is 0, it represents that the position is a free position, and the aerial vehicle may fly freely; while the weight of the grille is 1, it represents that there is the obstacle at the position, and the aerial vehicle needs to fly around. Then the sub-area may be configured according to the following formula:

$$If\ (map\_value > 1)\ then\ map\_value = 1.$$

In an embodiment, after the three-dimensional position information of the each point is projected into the local navigation chart taking the current flight position as the center according to the weight that is set respectively, the method may further include: if the weight sum of the all points in the sub-area is less than or equal to the preset threshold, the sub-area is configured as a passage area, as to allow the aerial vehicle to fly across. If the total weight of the sub-area is less than or equal to the preset threshold, it means that the sub-area is not the real obstacle area. Therefore, the sub-area may be marked as the passage area. For example, as for the grille map, if the weight sum of the all points within one grille is less than 1, the weight of the grille may be set to 0, as to indicate that the aerial vehicle may fly across.

S250, surveying and mapping data set by a user and used to indicate the obstacle area and an operating boundary area, and three-dimensional position information used to indicate the obstacle area in the local navigation chart are acquired.

Data during global obstacle avoidance planning is from two aspects, one of which is the surveying and mapping data (including a boundary and the obstacle) of the user, and another of which is the data of the local navigation chart. The data of the local navigation chart may be updated into a global navigation chart periodically.

The surveying and mapping data may be the data acquired by the user through a manual test, as an alternative, all data selected by the user through a map interface. Generally, the surveying and mapping data may include boundary points of the obstacle area and the operating boundary area. Before the aerial vehicle takes off, map data after surveying and mapping of the user may be uploaded into the aerial vehicle through a data link, for example, uploaded into a binocular system of the aerial vehicle, for establishment and operation of the global navigation chart.

The three-dimensional position information is the data that the obstacle area has been configured in the local navigation chart. The local navigation chart may be updated periodically. During updating, a position determined as the obstacle area may be selectively placed in an obstacle queue. The obstacle queue may be deleted or added: when the obstacle is determined in the local navigation chart, information of the obstacle area is added to the queue, and when the obstacle moves or disappears, the information of the obstacle area is deleted from the queue. The information of the obstacle area in the obstacle queue is periodically updated into the global navigation chart, in this way the global navigation chart may include information detected by the binocular system as well. It is to be noted that the disclosure is not intended to define updating of the data of the global navigation chart through a form of queue, and the user may further update the information of the obstacle area in the local navigation chart into the global navigation chart through other forms as needed.

The information of the obstacle area of the local navigation chart is updated into the global navigation chart, in this way the obstacle may be directly avoided during global planning, a shortest path may be found in the global scope, and accordingly the problem that the found path may not avoid the obstacle before surveying and mapping because there is surveying and mapping data only.

S260, the obstacle area and the operating boundary area are configured in a preset global navigation chart, as to indicate the aerial vehicle to avoid the obstacles of the obstacle area and the operating boundary area.

The global navigation chart may be a grille map. The global navigation chart is much bigger than the local navigation chart, and the local navigation chart may be very small. The global navigation chart needs to include scope of a current flight of the aerial vehicle as long as the need of local obstacle avoidance is satisfied. After the surveying and mapping data is acquired, a corresponding area may be marked in the global navigation chart according to position information of the operating boundary area and the obstacle area included in the surveying and mapping data. For example, the weights of some grilles in the global navigation chart are set to 1 according to the surveying and mapping data. After the position information of the obstacle area in the local navigation chart is acquired, the global navigation chart may be updated, as to update a corresponding position in the global navigation chart as the obstacle area. After the obstacle area and the operating boundary area are configured, the aerial vehicle may avoid the obstacles of the obstacle area and the operating boundary area according to the global navigation chart.

The global navigation chart should be initialized completely before takeoff of the aerial vehicle. Initialization is implemented to determine a size and a central position of the global navigation chart. In an embodiment, a center and a size of the preset global navigation chart are acquired according to a position of the aerial vehicle before takeoff and the surveying and mapping data. Information for initializing the global navigation chart is from the surveying and mapping data that set by the user. A geographic position shown by a center of a map and a size of the map have been determined during initialization. After these information are determined, a storage space may be allocated for the global navigation chart, and a storage position of obstacle information may be determined according to a geographical position of the obstacle, as to facilitate storage and access to the obstacle information.

In an embodiment, a horizontal boundary of the global navigation chart is determined by a maximum and a minimum of the position and the surveying and mapping data on a Y axis after swelling, and a vertical boundary of the global navigation chart is determined by a maximum and a minimum of the position and the surveying and mapping data on an X axis after swelling. Specifically, the maximum on the Y axis is found from the surveying and mapping data and the position information of the aerial vehicle before takeoff, and the horizontal boundary of an upper side of the global navigation chart is acquired after swelling the maximum for a certain distance. The minimum on the Y axis is found from the surveying and mapping data and the position information of the aerial vehicle before takeoff, and the horizontal boundary of a lower side of the global navigation chart is acquired after swelling the minimum for a certain distance. The maximum on the X axis is found from the surveying and mapping data and the position information of the aerial vehicle before takeoff, and the vertical boundary of a right side of the global navigation chart is acquired after swelling the maximum for a certain distance. The minimum on the X axis is found from the surveying and mapping data and the position information of the aerial vehicle before takeoff, and the vertical boundary of a left side of the global navigation chart is acquired after swelling the minimum for a certain distance. Herein, the swelling distance may be set according to the actual need. After the boundary information of the global navigation chart is acquired, the size and the central position of the global navigation chart may be acquired, as to complete the initialization of the global navigation chart.

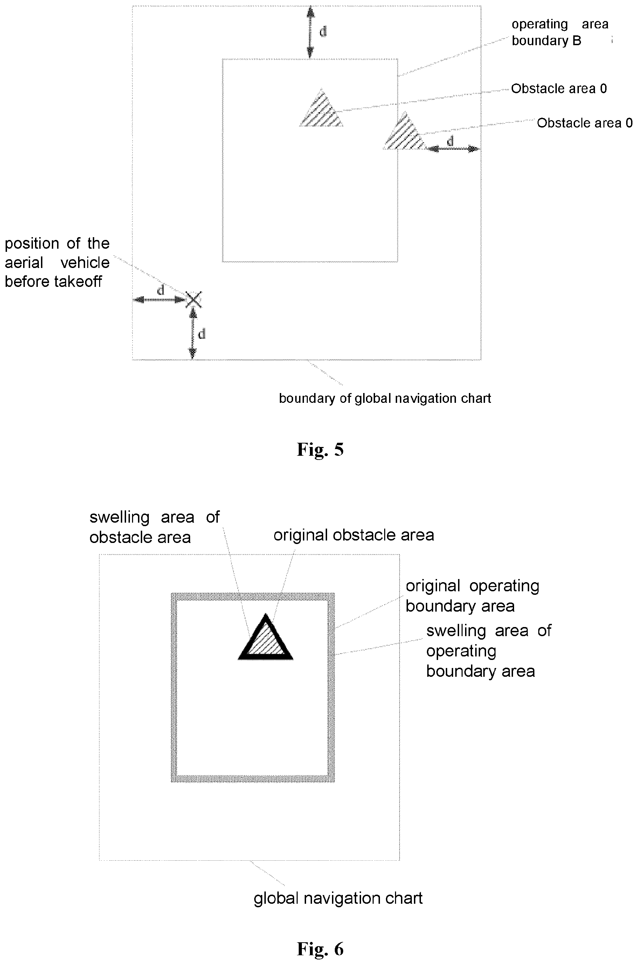

As shown in Fig. 5, an acquisition schematic diagram of a boundary of a global navigation chart of a specific embodiment is shown. In Fig. 5, d is a swelling distance. From Fig. 5, the global navigation chart shows an operating area boundary B and an obstacle area O with polygons, and a map uploaded to a binocular system may include position information of vertexes of these polygons. When determining the boundary of the global navigation chart, from a current position of an aerial vehicle before takeoff, a vertex position of the operating area boundary B and a vertex position of the obstacle area O, the following values are calculated: a maximum on an X axis under a navigation coordinate system is a maximum X of the obstacle area on a right side, a minimum on the X axis under the navigation coordinate system is an X of the aerial vehicle at a position before takeoff, a maximum on a Y axis under the navigation coordinate system is a Y at an uppermost side of the operating area boundary B, and a minimum on the Y axis under the navigation coordinate system is a Y of the aerial vehicle at the position before takeoff. The abovementioned four calculated values are swelled according to the swelling distance d respectively, and the boundary of the global navigation chart shown in Fig. 5 may be acquired. At the moment, a size, the boundary, and central position information of the global navigation information may be acquired, and accordingly initialization may be completed.

There are many modes to configure the obstacle area and an operating boundary area in the global navigation chart according to surveying and mapping data and data in a local navigation chart. For example, in an embodiment, the step that the obstacle area and the operating boundary area are configured in the preset global navigation chart may include: a first obstacle area and a first operating boundary area are acquired according to the acquired surveying and mapping data and three-dimensional position information, the first obstacle area and the first operating boundary area are swelled, as to acquire a second obstacle area and a second operating boundary area, and the second obstacle area and the second operating boundary area are configured as an area indicating the aerial vehicle to avoid an obstacle. The swelling distance of the first obstacle area and the first operating boundary area may be configured according to the actual need. These swelling areas are dangerous areas as well, and the aerial vehicle is prohibited to fly across. Therefore, the area needs to be configured to indicate the aerial vehicle to avoid the obstacle, in this way the aerial vehicle may keep a safe distance from the obstacle and the operating area boundary.

It is to be noted that the disclosure is not intended to limit the abovementioned mode of configuring the obstacle area and the operating boundary area, and the user may directly configure the area that the aerial vehicle is prohibited to fly across in the global navigation chart according to the surveying and mapping data and obstacle information in the local navigation chart as well rather than swell, or swell the obstacle area or the operating boundary area only. In addition, during swelling, the swelling distance in all directions may be set to be identical, as an alternative, different swelling distances may be set in allusion to all directions.

As shown in Fig. 6, a schematic diagram of configuring an obstacle area and an operating boundary area in a global navigation chart of a specific embodiment is shown, herein the global navigation chart is a grille map. When a weight of a grille in the grille map is 1, it represents that the grille is an area that an aerial vehicle is prohibited to fly across. When the weight of the grille is 0, it represents that the grille is an area that the aerial vehicle is allowed to fly across. As shown in Fig. 6, weights of an original operating boundary area and an original obstacle area in the global navigation chart are set to 1 completely according to surveying and mapping data and obstacle information in a local navigation chart, it shows that the area has been occupied by obstacles completely, and the aerial vehicle is prohibited to fly across. The original operating boundary area and the original obstacle area are swelled with a depth-first algorithm or other algorithms, and weights of swelled areas are completely set to 1. It represents that the swelled areas are dangerous, and the aerial vehicle is not allowed to approach. The abovementioned steps may be used to keep a safe distance between the aerial vehicle and the obstacle.

Because each pixel of a depth image may include distance information of a target, an amount of information therein is too great, and an amount of computation may be too great if three-dimensional position information of each point is acquired according to an original depth image. Therefore, the depth image needs to be preprocessed. There are many modes to preprocess the depth image to reduce the amount of computation. For example, in an embodiment, after the current flight position, the posture information and the depth image detected at the current flight position of the aerial vehicle are acquired and before the three-dimensional position information of the each point is acquired, the following step may further be included: sparse processing is implemented for the depth image.

According to a pin-hole imaging mode of a camera, distant obstacles may be centralized at a center of the image, while there may be a big area of nearby obstacles in the image because of a short distance. Therefore, in an embodiment, the step that the sparse processing is implemented for the depth image may include: the sparse processing is implemented for the depth image with a variable step size, herein, the variable step size is used to control gradual increasing of the pixels in the depth image from an edge to the center.

During specific implementation, un-equidistant sparse processing may be implemented from an image boundary, in this way the pixels close to the center of the image are dense, while the pixels on the edge of the image are sparse. A pseudo-code of the sparse processing is shown below:

```
for(i=0; i<img_height; i+=i_step);
    i_step = fabs(i-img_height/2) / height_step + 1
    for(j=0; j<img_width; j+=j_step);
        j_step = fabs(j-img_width/2) / width_step + 1
        HandleImage()
    end
end
```

where,

img_height and img_width are width and length of the image, respectively;
i_step and j_step are step sizes through the image, with an initial value of 1;
height_step and width_step are sparse factors in a longitudinal direction and a transverse direction of the image, respectively; and
HandleImage() represents post-processing of the depth image.

The original depth image, or a sparse depth image after the sparse processing may be only converted under the navigation coordinate system through coordinate conversion, and be only updated into the local navigation chart as information of the obstacle accordingly. Therefore, in an embodiment, the step that the three-dimensional position information of the each point is acquired according to the current flight position, the posture information and the depth image may include: the coordinate conversion is implemented for the depth image, as to acquire each point in the navigation coordinate system, and the three-dimensional position information of the each point is acquired according to the each point in the navigation coordinate system, the current flight position and the posture information.

There are many modes to implement the coordinate conversion. For example, in an embodiment, the step that the coordinate conversion is implemented for the depth image, as to acquire the each point in the navigation coordinate system may include: the each point in the depth image is converted to each point under a camera coordinate system according to an internal reference matrix of the camera, the each point under the camera coordinate system is converted to each point under a machine coordinate system according to a conversion matrix $R^b_c$ from the camera coordinate system to the machine coordinate system, and the each point under the machine coordinate system is converted to the each point of the navigation coordinate system according to a conversion matrix $R^g_b$ from the machine coordinate system to the navigation coordinate system.

Because the depth image itself may have noise and the obstacle may move (for example, a leave flutters with wind), and accordingly the point cloud calculated with the depth image may have a noise point. These noises may be accumulated in the local navigation chart along looping of the abovementioned steps, thereby leading to error measurement of the obstacle, error measurement for short. In order to reduce error measurement probability, in an embodiment, after the three-dimensional position information of the each point is projected into the local navigation chart according to the weight that is set respectively, the following steps may further be included: a weight of each point in a preset area in the local navigation chart is damped, and a weight sum of all points within each sub-area after damping is acquired. The weight of the point within the preset area in the local navigation chart is damped first, then the total weight of the each sub-area is calculated, and that whether the each sub-area is the obstacle area is judged. In this way, influence of the noise to judgment of the obstacle may be reduced, and accuracy of judgment of the obstacle area may be improved.

In an embodiment, the step that the weight of the each point in the preset area in the local navigation chart is damped may include: the weight of the each point in the preset area is multiplied by a preset damping factor. The damping factor may be set according to experience. If the preset area just includes N sub-areas, the damping may be implemented according to the following formula:

$$map\_value^* = damping\_factor.$$

where map_value represents the total weight of one sub-area in the preset area, and damping_factor represents the damping factor.

There are many modes to determine the preset area. For example, in an embodiment, the preset area may be determined according to a center of the local navigation chart, a horizontal field angle of a binocular system for acquiring the depth image in the aerial vehicle and a setting damping distance.

As shown in Fig. 2, a schematic diagram of a preset area determination method of a specific embodiment is shown, herein, O represents a center of a local navigation chart, namely, a current flight position of an aerial vehicle, θ represents a field angle of a binocular system and is determined by a parameter of the binocular system, and d represents a damping distance and is a fixed value which is set according to experience. In this way, a sector area determined by the abovementioned three parameters is a damping area. A weight of a point in the damping area is damped, while a weight of a point outside the damping area does not need to be damped.

It is to be noted that Fig. 2 only shows the damping area in the aerial vehicle forwardly equipped with the binocular system. If the binocular system is mounted behind the aerial vehicle or on a side of the aerial vehicle as well, the damping area is set at a position symmetric with the shown damping area or a position on a side of the damping area, as to damp the weight of the point in the damping area, namely, the damping area is associated with a mounting mode of the binocular system. If the depth image is acquired through other devices, the way of determining the preset area is the same as a concept of determining the preset area on the basis of the binocular system.

Based on an identical inventive concept, the embodiments of the disclosure further provide an obstacle avoidance apparatus. A specific embodiment of the apparatus of the disclosure will be introduced below in detail in combination with drawings.

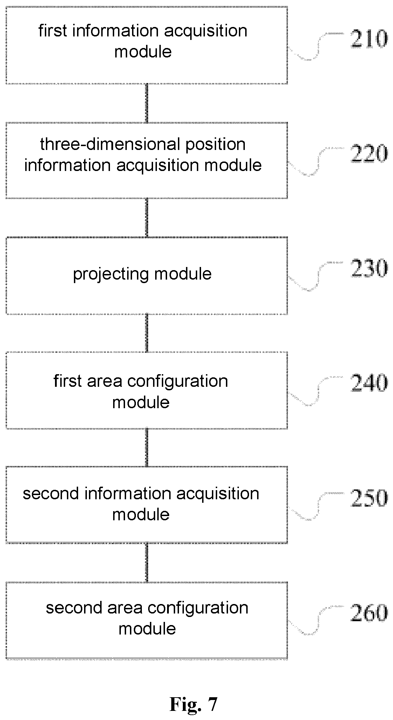

As shown in Fig. 7, in an embodiment, an obstacle avoidance apparatus may include a first information acquisition component 210, a three-dimensional position information acquisition component 220, a projecting component 230, a first area configuration component 240, a second information acquisition component 250 and a second area configuration component 260.

The first information acquisition component 210 is configured to acquire a current flight position, posture information and a depth image detected at the current flight position of an aerial vehicle.

The aerial vehicle may be an unmanned aerial vehicle for plant protection, and the like. The current flight position is defined as a geographical position of the aerial vehicle at a current moment, for example, longitude and latitude information of the aerial vehicle and the like. The posture information is defined as a flight posture of the aerial vehicle at the current moment, for example, a pitching angle, a roll angle, a yaw angle and the like. Both the current flight position and the posture information of the aerial vehicle may be acquired through flight control of the aerial vehicle. The depth image is a two-dimensional image of a shot target and may include distance information of each point and the current flight position, namely, a gray value of each pixel in the depth image is used to characterize the distance information of the shot target and the current position of the aerial vehicle. During practical application, the depth image may be detected through a binocular system of the aerial vehicle. During implementing local obstacle avoidance, multiple depth images or a single depth image may be used, and the disclosure is not intended to define. In addition, a size of the depth image may be set voluntarily as needed, and the disclosure is not intended to define as well. The acquired current flight position, the acquired posture information and the acquired depth image are used to establish a local navigation chart.

The three-dimensional position information acquisition component 220 is configured to acquire three-dimensional position information of each point according to the current flight position, the posture information and the depth image.

Because the gray value of the each pixel in the depth image may include the distance information of the shot target and the aerial vehicle, the three-dimensional position information corresponding to the each pixel may be calculated according to the current flight position, the posture information, and a pixel coordinate and the gray value of the each pixel in the depth image, namely, a three-dimensional point may be acquired corresponding to each two-dimensional pixel in the depth image.

A navigation coordinate system, namely, a local horizontal coordinate, is the coordinate system selected as a navigation reference during navigation according to the need of a navigation system, and used during navigation calculation. In view of that these three-dimensional points are applied to the navigation of the aerial vehicle, the calculated three-dimensional point is generally defined as the point under the navigation coordinate system. Optionally, the navigation coordinate system is a North East Down (NED) coordinate system.

Because the local navigation map needs to indicate an obstacle near the aerial vehicle only, while an acquired point cloud (each three-dimensional point) may include a distant point, a point affecting flight of the aerial vehicle may be retained only, for example, a point within a certain range above or below the aerial vehicle is retained only.

The projecting component 230 is configured to project the three-dimensional position information of the each point into a local navigation chart taking the current flight position as a center according to a weight that is set respectively, herein, the local navigation chart may include multiple sub-areas.

The local navigation chart is used for local navigation of the aerial vehicle and is dynamic. A center of a map is the current position of the aerial vehicle, and a size thereof may be set in advance manually or through a program. When the current position of the aerial vehicle is changed, the center of the local navigation chart may move; meanwhile a content of the whole map may be subjected to translation for one time. After translation, an original content outside the map may be deleted, while a new content may be reset.

The local navigation chart is divided into multiple sub-areas according to a certain rule, and a specific division rule may be set according to actual conditions, and the disclosure is not intended to define. For example, in an embodiment, the local navigation chart may be a grille map, and each grille is one sub-area.

The local navigation chart is a two-dimensional map. After the point cloud, namely, the point cloud of the navigation coordinate system is acquired, these point clouds need to be superposed into the local navigation chart with a certain weight, as to specifically judge what areas are obstacle areas. There are many modes to calculate the weight of the each point. For example, in an embodiment, the weight of the each point is acquired according to a multiply of a preset weight and a distance factor, herein, the distance factor is in direct proportion to the distance information.

The first area configuration component 240 is configured, if a weight sum of all points in the sub-area is greater than a preset threshold, to configure the sub-area as an obstacle area, as to indicate the aerial vehicle to avoid the obstacle of the obstacle area.

Because the acquired point may be an obstacle point, or a noise point and the like, the weights of these points need to be further calculated, as to acquire an actual obstacle area. After the each point is superposed into the local navigation chart according to the weight, each sub-area in the local navigation chart may include multiple points, and a total weight of the each sub-area may be acquired through calculating the total weight of the each sub-area. If the total weight is greater than the preset threshold, the sub-area is configured as the obstacle area.

In an embodiment, the obstacle avoidance apparatus may further include a passage area configuration component connecting with the projecting component 130 and configured to configure the sub-area as a passage area when the weight sum of the all points in the sub-area is less than or equal to the preset threshold, as to allow the aerial vehicle to fly across. If the total weight of the sub-area is less than or equal to the preset threshold, it means that the sub-area is not the real obstacle area. Therefore, the sub-area may be marked as the passage area.

The second information acquisition component 250 is configured to acquire surveying and mapping data set by a user and used to indicate the obstacle area and an operating boundary area, and three-dimensional position information indicating the obstacle area in the local navigation chart.

Data during global obstacle avoidance planning is from two aspects, one of which is the surveying and mapping data (including a boundary and the obstacle), and another of which is the data of the local navigation chart. The data of the local navigation chart may be updated into a global navigation chart periodically.

The surveying and mapping data may be the data acquired by the user through a manual test, as an alternative, all data selected by the user through a map interface. Generally, the surveying and mapping data may include boundary points of the obstacle area and the operating boundary area. Before the aerial vehicle takes off, map data after surveying and mapping of the user may be uploaded to the aerial vehicle through a data link, for example, uploaded into a binocular system of the aerial vehicle, for establishment and operation of the global navigation chart.

The three-dimensional position information is the data that the obstacle area has been configured in the local navigation chart. The local navigation chart may be updated periodically. During updating, a position determined as the obstacle area may be selectively placed in an obstacle queue. The obstacle queue may be deleted or added: when the obstacle is determined in the local navigation chart, information of the obstacle area is added to the queue, and when the obstacle moves or disappears, the information of the obstacle area is deleted from the queue. The information of the obstacle area in the obstacle queue is periodically updated into the global navigation chart, in this way the global navigation chart may include the information detected by the binocular system as well. It is to be noted that the disclosure is not intended to define updating of the data of the global navigation chart through a form of queue, and the user may further update the information of the obstacle area in the local navigation chart into the global navigation chart through other forms as needed.

The information of the obstacle area in the local navigation chart is updated into the global navigation chart, in this way the obstacle may be directly avoided during global planning, a shortest path may be found in the global scope, and accordingly the problem that the found path may not avoid the obstacle before surveying and mapping because there is surveying and mapping data only.

The second area configuration component 260 is configured to configure the obstacle area and the operating boundary area in a preset global navigation chart, as to indicate the aerial vehicle to avoid the obstacles of the obstacle area and the operating boundary area.

The global navigation chart may be a grille map. The global navigation chart is much bigger than the local navigation chart, and the local navigation chart may be very small. The global navigation chart needs to include scope of a current flight of the aerial vehicle as long as the need of local obstacle avoidance is satisfied. After the surveying and mapping data is acquired, a corresponding area may be marked in the global navigation chart according to position information of the operating boundary area and the obstacle area included in the surveying and mapping data. For example, weights of some grilles in the global navigation chart are set to 1 according to the surveying and mapping data. After the position information of the obstacle area in the local navigation chart is acquired, the global navigation chart may be updated, as to update a corresponding position in the global navigation chart as the obstacle area. After the obstacle area and the operating boundary area are configured, the aerial vehicle may avoid the obstacles of the obstacle area and the operating boundary area according to the global navigation chart.

The global navigation chart should be initialized completely before takeoff of the aerial vehicle. Initialization is implemented to determine a size and a central position of the global navigation chart. In an embodiment, a center and a size of the preset global navigation chart are acquired according to a position of the aerial vehicle before takeoff and the surveying and mapping data. Information for initializing the global navigation chart is from the surveying and mapping data that set by the user. A geographic position shown by a center of a map and a size of the map have been determined during initialization. After these information are determined, a storage space may be allocated for the global navigation chart, and a storage position of obstacle information may be determined according to a geographical position of the obstacle, as to facilitate storage and access to the obstacle information.

In an embodiment, a horizontal boundary of the global navigation chart is determined by a maximum and a minimum of the position and the surveying and mapping data on a Y axis after swelling, and a vertical boundary of the global navigation chart is determined by a maximum and a minimum of the position and the surveying and mapping data on an X axis after swelling. Specifically, the maximum on the Y axis is found from the surveying and mapping data and the position information of the aerial vehicle before takeoff, and the horizontal boundary of an upper side of the global navigation chart is acquired after swelling the maximum for a certain distance. The minimum on the Y axis is found from the surveying and mapping data and the position information of the aerial vehicle before takeoff, and the horizontal boundary of a lower side of the global navigation chart is acquired after swelling the minimum for a certain distance. The maximum on the X axis is found from the surveying and mapping data and the position information of the aerial vehicle before takeoff, and the vertical boundary of a right side of the global navigation chart is acquired after swelling the maximum for a certain distance. The minimum on the X axis is found from the surveying and mapping data and the position information of the aerial vehicle before takeoff, and the vertical boundary of a left side of the global navigation chart is acquired after swelling the minimum for a certain distance. Herein, the swelling distance may be set according to the actual need. After the boundary information of the global navigation chart is acquired, the size and the central position of the global navigation chart may be acquired, as to complete the initialization of the global navigation chart.

There are many modes to configure the obstacle area and the operating boundary area in the global navigation chart according to the surveying and mapping data and data in the local navigation chart. For example, in an embodiment, the second area configuration component 260 acquires a first obstacle area and a first operating boundary area according to the acquired surveying and mapping data and the acquired three-dimensional position information, swells the first obstacle area and the first operating boundary area, as to acquire a second obstacle area and a second operating boundary area, and configure the second obstacle area and the second operating boundary area as an area indicating the aerial vehicle to avoid the obstacle. The swelling distance of the first obstacle area and the first operating boundary area may be set according to the actual need. These swelling areas are dangerous areas as well, and the aerial vehicle is prohibited to fly across. Therefore, the area for the aerial vehicle to avoid the obstacle needs to be set, in this way the aerial vehicle may keep a safe distance from the obstacle and the operating area boundary.

It is to be noted that the disclosure is not intended to limit the abovementioned mode of configuring the obstacle area and the operating boundary area, and the user may directly configure the area that the aerial vehicle is prohibited to fly across in the global navigation chart according to the surveying and mapping data and the obstacle information in the local navigation chart as well rather than swell and the like, or swell the obstacle area or the operating boundary area only. In addition, during swelling, the swelling distance in all directions may be set to be identical, as an alternative, different swelling distances may be set in allusion to all directions.

Because the each pixel of the depth image may include the distance information of the target and an amount of information therein is too great, an amount of computation may be too great if the three-dimensional position information of the each point is acquired according to an original depth image. Therefore, the depth image needs to be preprocessed. There are many modes to preprocess the depth image to reduce the amount of computation, for example, in an embodiment, the obstacle avoidance apparatus may further include a sparse processing component connected between the first information acquisition component 210 and the three-dimensional position information acquisition component 220, and the sparse processing component is configured to implement the sparse processing for the depth image.

According to a pin-hole imaging mode of a camera, distant obstacles may be centralized at a center of the image, while there may be a big area of nearby obstacles in the image because of a short distance. Therefore, in an embodiment, the sparse processing component implements the sparse processing for the depth image with a variable step size, herein, the variable step size is used to control gradual increasing of the pixels in the depth image from an edge to the center.

The original depth image, or a sparse depth image after the sparse processing may be only converted under the navigation coordinate system through coordinate conversion, and be only updated into the local navigation chart as information of the obstacle accordingly. Therefore, in an embodiment, the three-dimensional position information acquisition component 220 implements the coordinate conversion for the depth image, as to acquire each point in the navigation coordinate system, and acquires the three-dimensional position information of the each point according to the each point in the navigation coordinate system, the current flight position and the posture information.

There are many modes to implement the coordinate conversion. For example, in an embodiment, the three-dimensional position information acquisition component 220 converts the each point in the depth image to each point under a camera coordinate system according to an internal reference matrix of the camera while converting the each point under the camera coordinate system to each point of a machine coordinate system according to a conversion matrix $R^b_c$ from the camera coordinate system to the machine coordinate system, and converting the each point under the machine coordinate system to the each point of the navigation coordinate system according to a conversion matrix $R^g_b$ from the machine coordinate system to the navigation coordinate system.

Because the depth image itself may have noise and the obstacle may move (for example, a leave flutters with wind), and accordingly the point cloud calculated with the depth image may have a noise point. These noises may be accumulated in the local navigation chart along looping of the abovementioned steps, thereby leading to error measurement of the obstacle, error measurement for short. In order to reduce error measurement probability, in an embodiment, the obstacle avoidance apparatus may further include a damping component connected between the projecting component 230 and the first area configuration component 240 (and/or the passage area configuration component). The damping component is configured to damp a weight of each point in a preset area in the local navigation chart, and acquire a weight sum of all points within each sub-area after damping. The damping component damps the weight of the point within the preset area in the local navigation chart first, then calculates the total weight of the each sub-area. That whether the each sub-area is the obstacle area is judged on the basis of the total weight. In this way, influence of the noise to judgment of the obstacle may be reduced, and accuracy of judgment of the obstacle area may be improved.

In an embodiment, the damping component multiplies the weight of the each point in the preset area by a preset damping factor. The damping factor may be set according to experience. If the preset area just includes N sub-areas, the total weight of the each sub-area may be multiplied by the damping factor, respectively.

There are many modes to determine the preset area. For example, in an embodiment, the preset area may be determined according to the center of the local navigation chart, a horizontal field angle of a binocular system for acquiring the depth image in the aerial vehicle and a setting damping distance. The damping area is associated with a mounting mode of the binocular system. If the depth image is acquired through other devices, the way of determining the preset area is the same as a concept of determining the preset area on the basis of the binocular system.

The disclosure further provides a terminal. The terminal may be an aerial vehicle or other devices, and may include a memory, a processor and a computer program stored on the memory and capable of running on the processor. The processor achieves steps of the abovementioned method for configuring navigation chart and the abovementioned automatic obstacle avoidance method when implementing the program.

The disclosure further provides a storage medium. The storage medium may include a stored program, herein, a device where the storage medium is located is controlled to implement the navigation method configuration method of the abovementioned first aspect when the program runs.

The disclosure further provides a storage medium. The storage medium may include a stored program, herein, a device where the storage medium is located is controlled to implement the obstacle avoidance method of the abovementioned second aspect when the program runs.

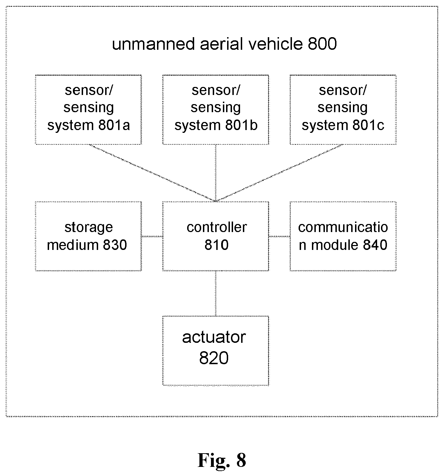

Fig. 8 is a structure diagram of an unmanned aerial vehicle 800 of an embodiment of the disclosure. As shown in Fig. 8, the unmanned aerial vehicle 800 may include a controller 810, and the controller 810 is connected with one or more sensors or sensing systems 801a-c in a wired or wireless mode. The sensor may be connected with the controller through a Controller Area Network (CAN). As an alternative, the controller 180 may be connected with one or more actuators 820 to control a state of the unmanned aerial vehicle.

The sensor may include any sensor described in the description, such as an inertial sensor, a Global Positioning System (GPS) receiver, a compass, a Real-Time Kinematic (RTK) Positioning sensor, a magnetometer, an altimeter, a distance sensor (such as an infrared sensor or a lidar sensor), a visual sensor or an image sensor (such as a camera or a vidicon), a photoelectric sensor, a motion sensor, a touch sensor, a pressure sensor, a temperature sensor and a magnetic sensor.

The inertial sensor, which is also called Inertial Measurement Unit (IMU), may be configured to determine posture information of the aerial vehicle, including a three-axis gyroscope, a three-axis acceleration sensor, a three-axis geomagnetic sensor, a barometer and the like. Herein three axes in the three-axis gyroscope, the three-axis acceleration sensor and the three-axis geomagnetic sensor are defined as three axes of the unmanned aerial vehicle in a direction from left to right, a direction from front to rear and a vertical direction. The sensor mainly measures angles of inclination of the three axes X, Y and Z. The three-axis acceleration sensor mainly measures accelerations of the three axes X, Y and Z of the unmanned aerial vehicle. The geomagnetic sensor senses geomagnetism and may make the unmanned aerial vehicle know its head and orientation, as to find a task position. The barometer may calculate a differential pressure through measuring atmospheric pressures at different positions to acquire a current height. Through combining the abovementioned sensors, the IMU may sense a change of a posture of the unmanned aerial vehicle, for example, a situation indicating that the unmanned aerial vehicle leans towards, or leans left and right currently, the orientation of the head, the height and other most basic posture data.

The image sensor may be configured to determine obstacle information in all directions of the unmanned aerial vehicle. The image sensor may include a binocular system, and the binocular system may include at least two cameras. In this way, three-dimensional information of an object may be determined through an image processing algorithm, and accordingly a three-dimensional model of the object may be constructed.

In some embodiments, some sensors (for example,the visual sensor) may be connected with a Field Programmable Gate Array (FPGA, not shown in the figure). The FPGA may be connected with the controller (for example, through a General Purpose Memory Controller (GPMC). In some embodiments, some sensors (for example, the visual sensor) and/or the FPGA may be connected with a transmission component. The transmission component may be configured to transmit data (for example, image data) acquired by the sensor to any appropriate external device or system, for example, a terminal or a remote device described in the description.

The controller may include one or more programmable processors (for example, a central processing unit). The controller may be connected with a storage medium (for example, a nonvolatile computer readable media) 830. The storage medium may include one or more storage units (for example, a removable medium or an external memory, such as an SD card or a random access memory). In some embodiments, data from the sensor (for example, the camera) may be directly transmitted and stored in the storage unit (for example, through Direct Memory Access (DMA)) of the storage medium. The storage unit of the storage medium may store a code and/or a program command. The controller implements the code and/or the program command, as to implement a method embodiment described in the description. For example, the controller may implement the command, to make one or more processors of the controller analyze data generated by one or more sensors or sensing systems, to accordingly determine the orientation and/or motion information, and detected external contact information and/or detected external signal information of the unmanned aerial vehicle described in the description. For another example, the controller may implement the command, to make one or more processors of the controller determine whether to control the unmanned aerial vehicle to take off or land voluntarily.

The storage unit of the storage medium 830 stores sensing data from the one or more sensing systems, and the sensing data will be processed by the controller. In some embodiments, the storage unit may store the orientation and/or the motion information, and the detected external contact information and/or the detected external signal information of the unmanned aerial vehicle. Optionally or conjunctively, the storage unit may store predetermined or pre-stored data for controlling the unmanned aerial vehicle (for example, a predetermined threshold of the sensing data, a parameter for controlling the actuator, a predetermined flight path, a predetermined flight speed, a predetermined flight acceleration or a predetermined flight direction of the unmanned aerial vehicle).

As previously mentioned, the controller 810 may adjust the state of the unmanned aerial vehicle through one or more actuators 820. For example, the controller may control a rotor of the unmanned aerial vehicle (for example, control a revolving speed of the rotor), to accordingly adjust spatial distribution of the unmanned aerial vehicle or other parts (for example, a load, a carrier thereof) relative to up to six degrees of freedom (translational movement along X, Y and Z axes and rotational movement of a horizontal roller, a pitch axis and a heading axis). Optionally or conjunctively, the controller may adjust the speed or the acceleration of the unmanned aerial vehicle relative to the six degrees of freedom. In some embodiments, the controller may control the unmanned aerial vehicle based on predetermined control data, or a position, external contact or external signal information of the unmanned aerial vehicle. The direction, the external contact or external signal information of the unmanned aerial vehicle may be acquired through processing the sensing data from one or more sensing systems. For example, the controller may provide the actuator with an acceleration signal or a deceleration signal based on whether takeoff or landing is needed.

In different embodiments, the actuator may include a motor, an electronic speed regulator, a mechanical transmission device, a hydraulic transmission device, a pneumatic transmission device and the like. The motor may include a magnetic motor, an electrostatic motor or a piezoelectric motor. For example, in a certain embodiment, the actuator may include a brush or brushless direct current motor.

The controller may be connected with a communication component 840, for transmitting and/or receiving data from one or more external devices (for example, the terminal, a display device, a ground control apparatus or other remote controllers). The communication component may use any suitable mode of communication, for example, wired communication or wireless communication. For example, the communication component may use one or more local area networks, wide area networks, infrared ray, radio waves, WiFi, Point-to-Point (P2P) networks, telecommunication networks, cloud communication and the like. Optionally, a relay station may be taken, for example, a launching tower, a satellite or a mobile station. The wireless communication may be or may not be influenced by a distance. In some embodiments, communication may be implemented inside or outside a line of sight. The communication component may transmit and/or receive one or more sensing data, one or more orientations and/or one or more pieces of motion information from the sensing systems, the external contact information and/or the external signal information acquired through processing the sensing data, predetermined control data, a user command from the terminal or the remote controller, and the like.

A part of the unmanned aerial vehicle may be configured fittingly. For example, one or more parts of the unmanned aerial vehicle may be configured on the unmanned aerial vehicle, the carrier, the load, the terminal, the sensing system or any other remote devices or systems which are in communication with the abovementioned one or more devices. In addition, although Fig. 8 describes a single controller and a single storage medium, those skilled in the art should know that the description is not intended to limit the unmanned aerial vehicle, and the unmanned aerial vehicle may include multiple controllers and/or storage mediums. In some embodiments, one or more of the multiple controllers and/or storage mediums may be configured at different positions, for example, on the unmanned aerial vehicle, the carrier, the load, the terminal, the sensing system or any other remote devices or systems which are in communication with the one or more devices, or an appropriate combination thereof, in this way the unmanned aerial vehicle may be facilitated to implement processing and/or storage function at the abovementioned one or more positions.

The unmanned aerial vehicle may include, but is not limited to, a single-rotor-wing aerial vehicle, multi-rotor-wing aerial vehicle and a rotor aerial vehicle. The rotor aerial vehicle usually makes use of a propeller to rotate around a rod or an axis to produces a life force. The rotor aerial vehicle may include, for example, a helicopter, a cyclogyro, a gyroplane, a gyrodyne and the like. The rotor aerial vehicle may include multiple rotors which are mounted at multiple positions of the aerial vehicle. For example, the unmanned aerial vehicle may include a four-rotor helicopter, a six-rotor helicopter, a ten-rotor helicopter and the like.

In different embodiments, the unmanned aerial vehicle may move freely relative to the six degrees of freedom (for example, three translational degrees of freedom and three rotational degrees of freedom). Or, the unmanned aerial vehicle may be limited to move within one or more degrees of freedom, for example, limited to a predetermined orbit or trajectory. The motion may be driven by any appropriate driving mechanisms, for example, an engine or the motor. In some embodiments, the unmanned aerial vehicle may be driven by a propulsion system. The propulsion system may include, for example, the engine, the motor, a wheel, an axle, a magnet, the rotor, the propeller, a blade, a nozzle or any combinations of the abovementioned appropriate parts. Any appropriate energies, for example, electric energy, magnetic energy, solar energy, wind energy, gravitational energy, chemical energy, nuclear energy or any combination of the appropriate energies, may provide the unmanned aerial vehicle with power for the movement.

In different embodiments, the unmanned aerial vehicles with different sizes, dimensions and/or structures may be taken. For example, in an embodiment, the unmanned aerial vehicle may be the multi-rotor unmanned aerial vehicle, and a distance between shafts of the rotors rotating oppositely does not exceed a certain threshold. The threshold may be about 5m, 4m, 3m, 2m, 1m and the like. For example, the distance between the shafts of the rotors rotating oppositely may be 350mm, 450mm, 800mm, 900mm and the like.

In some embodiments, the size and/or dimensions of the unmanned aerial vehicle is enough to accommodate one person staying therein or thereon. Or, the size and/or the dimensions of the unmanned aerial vehicle is not enough to accommodate one person staying therein or thereon. In some situations, a maximum size of the unmanned aerial vehicle (for example, a length, a width, a height, a diameter, a diagonal line) does not exceed 5m, 4m, 3m, 2m, 1m, 0.5m or 0.1m. For example, the distance between the shafts of the rotors rotating oppositely may not exceed 5m, 4m, 3m, 2m, 1m, 0.5m or 0.1m. In some embodiments, a volume of the unmanned aerial vehicle may be less than 100cm*100cm*100cm. In some embodiments, the volume of the unmanned aerial vehicle may be less than 50cm*50cm*30cm. In some embodiments, the volume of the unmanned aerial vehicle may be less than 5cm* 5cm*3cm. In some embodiments, an area occupied by the unmanned aerial vehicle (an area of a cross section of the unmanned aerial vehicle) may be less than about $32,000cm^2$, $20,000cm^2$, $10,000cm^2$, $1,000cm^2$, $500cm^2$, $100cm^2$ or less. In some situations, a weight of the unmanned aerial vehicle may not exceed 1000kg, 500kg, 100kg, 10kg, 5kg, 1kg or 0.5kg.

In different embodiments, the unmanned aerial vehicle may carry a load. The load may include one or more cargoes, apparatuses, instruments and the like. The load may have a housing. Optionally, part or the whole of the load may not have the housing. The load may be fixed rigidly relative to the unmanned aerial vehicle. Or, the load may move relative to the unmanned aerial vehicle (for example, translation or rotation relative to the unmanned aerial vehicle).

In some embodiments, the load may include a load and a carrier carrying the load, for example, a medical kit. The carrier may be formed integrally with the unmanned aerial vehicle. Or, the carrier may be detachably connected to the unmanned aerial vehicle. The carrier may be connected with the unmanned aerial vehicle directly or indirectly. The carrier may support the load (for example, at least part of the weight of the load). The carrier may include an appropriate mounting structure (for example, a pan-tilt), in this way the motion of the load may be stabilized and/or controlled. In some embodiments, the carrier may be applicable to control of a state (for example, a position and/or a direction) of the load relative to the unmanned aerial vehicle. For example, the carrier may move relative to the unmanned aerial vehicle (for example, relative to one, two or three translational degrees of freedom and/or one, two or three rotational degrees of freedom), in this way the load maintains its position and/or direction relative to an appropriate reference coordinate system, without being affected by the motion of the unmanned aerial vehicle. The reference coordinate system may be a fixed reference coordinate system (for example, an ambient environment). Or, the reference coordinate system may be a motion reference coordinate system (for example, the unmanned aerial vehicle, and the load).

In some embodiments, the carrier may make the load move relative to the carrier and/or the unmanned aerial vehicle. The motion may be translation relative to up to three degrees of freedom (for example, along one, two or three axes), rotation relative to up to three degrees of freedom (for example, along one, two or three axes), or any combination thereof. For example, the carrier may include a frame subassembly and an actuator subassembly. The frame subassembly may provide the load with a structural support. The frame subassembly may include multiple individual frame components, and some of these frame components may move mutually.

The frame subassembly and/or the individual frame component may be connected with a drive subassembly, and the drive subassembly drives the frame subassembly to move. The drive subassembly may include one or more actuators (for example, the motors), and is configured to drive the individual frame component to move. The actuator may make multiple frame components move simultaneously or only one frame component move every time. The frame component moves, thereby making the load move accordingly. For example, the drive subassembly may drive one or more frame components to rotate around one or more rotating axes (for example, the horizontal roller, the pitch axis and the heading axis). The rotation of the one or more frame subassemblies may make the load rotate around one or more rotating axes relative to the unmanned aerial vehicle. Optionally or conjunctively, the drive subassembly may drive one or more frame components to translate along one or more translation axes, in this way the load may translate along one or more corresponding translation axes relative to the unmanned aerial vehicle.

The load may be connected with the unmanned aerial vehicle directly (for example, in direct contact with the unmanned aerial vehicle) or indirectly (for example, not in contact with the unmanned aerial vehicle) through the carrier. Optionally, the load may be mounted on the unmanned aerial vehicle, without needing the carrier. The load and the carrier may form a whole. Or, the load may be connected with the carrier detachably. In some embodiments, the load may include one or more load elements, and as previously mentioned, the load element may move relative to the unmanned aerial vehicle and/or the carrier. The load may include one or more sensors configured to measure one or more targets. The load may include any appropriate sensor, for example, an image acquisition device (for example, the camera), a sound acquisition device (for example, a parabolic microphone), an infrared imaging device or an ultraviolet imaging device. The sensor may provide static sensing data (for example, a photo) or dynamic sensing data (for example, a video). In some embodiments, the sensor provides a sensing object of the load with the sensing data. Optionally or conjunctively, the load may include one or more transmitters configured to provide one or more sensing objects with a signal. The transmitter may be any appropriate transmitter, for example, a light source or a sound source. In some embodiments, the load may include one or more transceivers, for example, configured to implement communication with a component which is far away from the unmanned aerial vehicle. In the embodiment of the disclosure, through calling a program stored in the storage medium 830, the controller 810 is configured to acquire second map data and a flight position when the aerial vehicle flies according to a flight route while matching an operating area of first map data with the second map data to calculate a flight offset of the flight position deviating from the flight route, and correcting flight according to the flight offset to correct the flight route.

Optionally, the controller 810 may further be configured to implement the following steps.

A current flight position, posture information and a depth image detected at the current flight position of the aerial vehicle are acquired.

Three-dimensional position information of each point is acquired according to the current flight position, the posture information and the depth image.

The three-dimensional position information of the each point is projected into a local navigation chart taking the current flight position as a center according to a weight that is set respectively.

Optionally, the controller 810 may further be configured to implement the following steps.

A current flight position, posture information and a depth image detected at the current flight position of the aerial vehicle are acquired.

Three-dimensional position information of each point is acquired according to the current flight position, the posture information and the depth image.

The three-dimensional position information of the each point is projected into a local navigation chart taking the current flight position as a center according to a weight that is set respectively, herein, the local navigation chart may include multiple sub-areas.

If a weight sum of all points in the sub-area is greater than a preset threshold, the sub-area is configured as an obstacle area, as to indicate the aerial vehicle to avoid an obstacle of the obstacle area.

Surveying and mapping data set by a user and used to indicate the obstacle area and an operating boundary area, and three-dimensional position information used to indicate the obstacle area in the local navigation chart are acquired.

The obstacle area and the operating boundary area are configured in a preset global navigation chart, as to indicate the aerial vehicle to avoid the obstacles of the obstacle area and the operating boundary area.

The abovementioned navigation chart navigation method, the automatic obstacle avoidance method, the automatic obstacle avoidance apparatus, the terminal and the unmanned aerial vehicle dynamically generate the local navigation chart taking the current flight position of the aerial vehicle as the center and analyze the three-dimensional position information of the each point according to the position information, the posture information and the depth image acquired by the aerial vehicle during flying. The three-dimensional position information of the each point may be information of an unknown obstacle that the aerial vehicle meets during flying, or information of other objects that the aerial vehicle meets during flying and is not planned in advance. The operating route may be planned in real time according to the local navigation chart when the three-dimensional position information of the each point is projected into the local navigation image. Because the operating route is dynamically generated according to the information acquired when the aerial vehicle flies, a temporary task change may be effectively coped, for example, an operation is implemented at the same time for one operating area to which the operating route is not planned in advance, or the obstacle is avoided automatically in the area where the unknown obstacle is located, and so on. In addition, the information of the obstacle area of the local navigation chart is updated into the global navigation chart, in this way the obstacle may be directly avoided during global planning, a shortest path may be found in the global scope, and accordingly the problem that a found path may not avoid the obstacle before surveying and mapping because there is surveying and mapping data only.

Each function unit in each embodiment of the disclosure may be integrated into a processing component. As an alternative, each unit may exist independently, and two or more than two units may be integrated into one component. The integrated component may be implemented in a hardware form, and, as an alternative, may be implemented in form of software function component. As an alternative, when implemented in form of the software function component and sold or used as an independent product, the integrated component may be stored in a computer-readable storage medium. The storage medium may include, but is not limited to, any kind of discs (including a floppy disc, a hard disc, an optical disc, a Compact Disc Read-Only Memory (CD-ROM) and a magneto-optical disk), a Read-Only Memory (ROM), a Random AcceSS Memory (RAM), an EraSable Programmable Read-Only Memory (EPROM), an Electrically EraSable Programmable Read-Only Memory (EEPROM), a flash memory, a magnetic card or an optical card. Namely, the storage medium may include any medium that stores or transmits information in a readable form by a device. The storage medium may be the ROM, a magnetic disc or the optical disc, and the like.

Those skilled in the art should understand that steps, measures and solutions in various operations, methods and procedures that have been discussed in the disclosure may be alternated, changed, combined or deleted. Optionally, as an alternative, other steps, measures and solutions in the various operations, methods and procedures that have been discussed in the disclosure may be alternated, changed, rearranged, decomposed, combined or deleted. Optionally, as an alternative, the steps, measures and solutions in the various operations, methods and procedures disclosed in the disclosure in the conventional art may be alternated, changed, rearranged, decomposed, combined or deleted.

The above are only part of embodiments of the disclosure. It is to be pointed out that those of ordinary skill in the art may further make various improvements and embellishments without departing from the principle of the disclosure, and these improvements and embellishments shall also fall within the scope of protection of the disclosure.

## Industrial Applicability

A solution provided by the disclosure may be applied to the field of navigation of an unmanned aerial vehicle. A method for configuring navigation chart may include: acquiring a current flight position, posture information and a depth image detected at the current flight position of the unmanned aerial vehicle; acquiring three-dimensional position information of each point according to the current flight position, the posture information and the depth image; and projecting the three-dimensional position information of the each point into a local navigation chart taking the current flight position as a center according to a weight that is set respectively. The solution of the disclosure may generate an operating route dynamically, to effectively cope with a temporary task change.

## Claims

1. A method for configuring navigation chart, comprising:

    acquiring a current flight position, posture information and a depth image detected at the current flight position of an aerial vehicle;

acquiring three-dimensional position information of each point according to the current flight position, the posture information and the depth image; and

projecting the three-dimensional position information of the each point into a local navigation chart taking the current flight position as a center according to a weight that is set respectively.

2. The method for configuring navigation chart as claimed in claim 1, wherein, the local navigation chart comprises multiple sub-areas;

after projecting the three-dimensional position information of the each point into the local navigation chart taking the current flight position as the center according to the weight that is set respectively, further comprising:

if a weight sum of all points in the sub-area is greater than a preset threshold, configuring the sub-area as an obstacle area, as to indicate the aerial vehicle to avoid an obstacle.

3. The method for configuring navigation chart as claimed in claim 2, wherein, after projecting the three-dimensional position information of the each point into the local navigation chart taking the current flight position as the center according to the weight that is set respectively, further comprising:

if the weight sum of the all points in the sub-area is less than or equal to the preset threshold, configuring the sub-area as a passage area, as to allow the aerial vehicle to fly across.

4. The method for configuring navigation chart as claimed in claim 1, wherein, the depth image comprises distance information of the each point and the current flight position; and the weight of the each point is acquired according to a multiply of a preset weight and a distance factor, wherein, the distance factor is in direct proportion to the distance information.

5. The method for configuring navigation chart as claimed in claim 2, wherein, after projecting the three-dimensional position information of the each point into the local navigation chart taking the current flight position as the center according to the weight that is set respectively, further comprising:

damping a weight of each point in a preset area in the local navigation chart; and

acquiring a weight sum of the all points within the each sub-area after damping.

6. The navigation chart configuration method as claimed in claim 5, wherein, damping the weight of the each point in the preset area in the local navigation chart comprises:

multiplying the weight of the each point in the preset area by a preset damping factor.

7. The method for configuring navigation chart as claimed in claim 5, wherein, the preset area is determined according to a center of the local navigation chart, a horizontal field angle of a binocular system for acquiring the depth image in the aerial vehicle and a setting damping distance.

8. The method for configuring navigation chart as claimed in claim 1, wherein, acquiring the three-dimensional position information of the each point according to the current flight position, the posture information and the depth image comprises:

implementing coordinate conversion for the depth image, as to acquire each point in a navigation coordinate system; and

acquiring the three-dimensional position information of the each point according to the each point in the navigation coordinate system, the current flight position and the posture information.

9. The method for configuring navigation chart as claimed in claim 8, wherein, implementing the coordinate conversion for the depth image, as to acquire the each point in the navigation coordinate system comprises:

converting the each point in the depth image to each point under a camera coordinate system according to an internal reference matrix of a camera;

converting the each point under the camera coordinate system to each point of a machine coordinate system according to a conversion matrix from the camera coordinate system to the machine coordinate system; and

converting the each point under the machine coordinate system to the each point of the navigation coordinate system according to a conversion matrix from the machine coordinate system to the navigation coordinate system.

10. The method for configuring navigation chart as claimed in claim 1, wherein, after acquiring the current flight position, the posture information and the depth image detected at the current flight position of the aerial vehicle and before acquiring the three-dimensional position information of the each point, further comprising:
implementing sparse processing for the depth image.

11. The navigation chart configuration method as claimed in claim 10, wherein, implementing the sparse processing for the depth image comprises:
implementing the sparse processing for the depth image with a variable step size, wherein, the variable step size is used to control gradual increasing of pixels in the depth image from an edge to the center.

12. The method for configuring navigation chart as claimed in any one of claims 2-11, wherein, the local navigation chart is a grille map, and each grille is one sub-area.

13. An obstacle avoidance method, comprising:

acquiring a current flight position, posture information and a depth image detected at the current flight position of an aerial vehicle;
acquiring three-dimensional position information of each point according to the current flight position, the posture information and the depth image; and
projecting the three-dimensional position information of the each point into a local navigation chart taking the current flight position as a center according to a weight that is set respectively, wherein, the local navigation chart comprises multiple sub-areas;
if a weight sum of all points in the sub-area is greater than a preset threshold, configuring the sub-area as an obstacle area, as to indicate the aerial vehicle to avoid an obstacle of the obstacle area;
acquiring surveying and mapping data set by a user and used to indicate the obstacle area and an operating boundary area, and three-dimensional position information used to indicate the obstacle area in the local navigation chart; and
configuring the obstacle area and the operating boundary area in a preset global navigation chart, as to indicate the aerial vehicle to avoid the obstacles of the obstacle area and the operating boundary area.

14. The obstacle avoidance method as claimed in claim 13, wherein, configuring the obstacle area and the operating boundary area in the preset global navigation chart comprises:

acquiring a first obstacle area and a first operating boundary area according to the acquired surveying and mapping data and the acquired three-dimensional position information;
swelling the first obstacle area and the first operating boundary area, as to acquire a second obstacle area and a second operating boundary area; and
configuring the second obstacle area and the second operating boundary area as an area indicating the aerial vehicle to avoid the obstacle.

15. The obstacle avoidance method as claimed in claim 13, wherein, a center and a size of the preset global navigation chart are acquired according to a position before takeoff of the aerial vehicle and the surveying and mapping data.

16. The obstacle avoidance method as claimed in claim 15, wherein, a horizontal boundary of the global navigation chart is determined by a maximum and a minimum of the position and the surveying and mapping data on a Y axis after swelling, and a vertical boundary of the global navigation chart is determined by a maximum and a minimum of the position and the surveying and mapping data on an X axis after swelling.

17. The obstacle avoidance method as claimed in claim 13, wherein, after projecting the three-dimensional position information of the each point into the local navigation chart taking the current flight position as the center according to the weight that is set respectively, further comprising:
if the weight sum of the all points in the sub-area is less than or equal to the preset threshold, configuring the sub-area as a passage area, as to allow the aerial vehicle to fly across.

18. The obstacle avoidance method as claimed in claim 13, wherein, the depth image comprises distance information of the each point and the current flight position; and the weight of the each point is acquired according to a multiply of a preset weight and a distance factor, wherein, the distance factor is in direct proportion to the distance information.

19. The obstacle avoidance method as claimed in claim 13, wherein, after projecting the three-dimensional position information of the each point into the local navigation chart, further comprising:

damping a weight of each point in a preset area in the local navigation chart; and
acquiring a weight sum of all points within the each sub-area after damping.

20. The obstacle avoidance method as claimed in claim 19, wherein, damping the weight of the each point in the preset area in the local navigation chart comprises:
multiplying the weight of the each point in the preset area by a preset damping factor.

21. The obstacle avoidance method as claimed in claim 19, wherein, the preset area is determined according to the center of the local navigation chart, a horizontal field angle of a binocular system for acquiring the depth image in the aerial vehicle and a setting damping distance.

22. The obstacle avoidance method as claimed in claim 13, wherein, acquiring the three-dimensional position information of the each point according to the current flight position, the posture information and the depth image comprises:

implementing coordinate conversion for the depth image, as to acquire each point in a navigation coordinate system; and
acquiring the three-dimensional position information of the each point according to the each point in the navigation coordinate system, the current flight position and the posture information.

23. The obstacle avoidance method as claimed in claim 22, wherein, implementing coordinate conversion for the depth image, as to acquire the each point in the navigation coordinate system comprises:

converting the each point in the depth image to each point under a camera coordinate system according to an internal reference matrix of a camera,
converting the each point under the camera coordinate system to each point of a machine coordinate system according to a conversion matrix from the camera coordinate system to the machine coordinate system; and
converting the each point under the machine coordinate system to the each point of the navigation coordinate system according to a conversion matrix from the machine coordinate system to the navigation coordinate system.

24. The obstacle avoidance method as claimed in claim 13, wherein, after acquiring the current flight position, the posture information and the depth image detected at the current flight position of the aerial vehicle and before acquiring the three-dimensional position information of the each point, further comprising:
implementing sparse processing for the depth image.

25. The obstacle avoidance method as claimed in claim 24, wherein, implementing the sparse processing for the depth image comprises:
implementing the sparse processing for the depth image with a variable step size, wherein, the variable step size is used to control gradual increasing of pixels in the depth image from an edge to the center.

26. The obstacle avoidance method as claimed in any one of claims 13-25, wherein, the local navigation chart and the global navigation chart are grille maps, and each grille is one sub-area.

27. A navigation chart configuration apparatus of an aerial vehicle, comprising:

an information acquisition module, configured to acquire a current flight position, posture information and a depth image detected at the current flight position of an aerial vehicle;
a three-dimensional position information acquiring module, configured to acquire three-dimensional position information of each point according to the current flight position, the posture information and the depth image; and
a projecting module, configured to project the three-dimensional position information of the each point into a local navigation chart taking the current flight position as a center according to a weight that is set respectively.

28. An obstacle avoidance apparatus, comprising:

a first information acquisition module, configured to acquire a current flight position, posture information and a depth image detected at the current flight position of an aerial vehicle;

a three-dimensional position information acquiring module, configured to acquire three-dimensional position information of each point according to the current flight position, the posture information and the depth image;

a projecting module, configured to project the three-dimensional position information of the each point into a local navigation chart taking the current flight position as a center according to a weight that is set respectively, wherein, the local navigation chart comprises multiple sub-areas;

a first area configuration module, configured, if a weight sum of all points in the sub-area is greater than a preset threshold, to configure the sub-area as an obstacle area, as to indicate the aerial vehicle to avoid an obstacle of the obstacle area;

a second information acquiring module, configured to acquire surveying and mapping data set by a user and used to indicate the obstacle area and an operating boundary area, and three-dimensional position information used to indicate the obstacle area in the local navigation chart; and

a second area configuration module, configured to configure the obstacle area and the operating boundary area in a preset global navigation chart, as to indicate the aerial vehicle to avoid the obstacles of the obstacle area and the operating boundary area.

29. A terminal, comprising a memory, a processor and a computer program stored on the memory and capable of running on the processor, the processor achieving steps of the method as claimed in any one of claims 1-12 when implementing the program.

30. A terminal, comprising a memory, a processor and a computer program stored on the memory and capable of running on the processor, the processor achieving steps of the method as claimed in any one of claims 13-26 when implementing the program.

31. A storage medium, the storage medium comprising a stored program, wherein, a device where the storage medium is located is controlled to implement the navigation chart configuration method as claimed in any one of claims 1-12 when the program runs.

32. A storage medium, the storage medium comprising a stored program, wherein, a device where the storage medium is located is controlled to implement the obstacle avoidance method as claimed in any one of claims 13-26 when the program runs.

33. An unmanned aerial vehicle, comprising a communication component, a sensor, a controller and a storage medium; the sensor comprising an image sensor, a Global Positioning System (GPS) receiver, a Real-Time Kinematic (RTK) positioning sensor and an inertial sensor;

the communication component, configured to communicate with a ground control apparatus;

the GPS receiver and the positioning sensor, configured to determine a current flight position of the unmanned aerial vehicle;

the inertial sensor, configured to determine posture information of the unmanned aerial vehicle;

the image sensor, configured to detect a depth image at the current flight position;

the controller being connected with the storage medium, and the storage medium being configured to store a program; and the program being used to implement steps of the method as claimed in any one of claims 1-12 when running.

34. An unmanned aerial vehicle, comprising a communication module, a sensor, a controller and a storage medium; the sensor comprising an image sensor, a Global Positioning System (GPS) receiver, a Real-Time Kinematic (RTK) positioning sensor and an inertial sensor;

the communication module, configured to communicate with a ground control apparatus;

the GPS receiver and the positioning sensor, configured to determine a current flight position of the unmanned aerial vehicle;

the inertial sensor, configured to determine posture information of the unmanned aerial vehicle;

the image sensor, configured to detect a depth image at the current flight position;

the controller being connected with the storage medium, and the storage medium being configured to store a program; and the program being used to implement steps of the method as claimed in any one of claims 13-26 when running.

a current flight position, posture information and a depth image detected at the current flight position of an aerial vehicle are acquired ⟋ S110

three-dimensional position information of each point is acquired according to the current flight position, the posture information and the depth image ⟋ S120

the three-dimensional position information of the each point is projected into a local navigation chart taking the current flight position as a center according to a weight that is set respectively ⟋ S130

**Fig. 1**

local navigation chart

damping area

d

O

**Fig. 2**

information acquisition module — 110

three-dimensional position information acquisition module — 120

projecting module — 130

**Fig. 3**

a current flight position, posture information and a depth image detected at the current flight position of an aerial vehicle are acquired. — S210

three-dimensional position information of each point is acquired according to the current flight position, the posture information and the depth image — S220

the three-dimensional position information of the each point is projected into a local navigation chart taking the current flight position as a center according to a weight that is set respectively — S230

if a weight sum of all points in the sub-area is greater than a preset threshold, the sub-area is configured as an obstacle area, as to indicate the aerial vehicle to avoid an obstacle of the obstacle area — S240

surveying and mapping data set by a user and used to indicate the obstacle area and an operating boundary area, and three-dimensional position information used to indicate the obstacle area in the local navigation chart are acquired — S250

the obstacle area and the operating boundary area are configured in a preset global navigation chart, as to indicate the aerial vehicle to avoid the obstacles of the obstacle area and the operating boundary area — S260

**Fig. 4**

operating area
boundary B

Obstacle area 0

Obstacle area 0

position of the
aerial vehicle
before takeoff

d

d

d

boundary of global navigation chart

**Fig. 5**

swelling area of
obstacle area

original obstacle area

original operating
boundary area

swelling area of
operating
boundary area

global navigation chart

**Fig. 6**

first information acquisition module — 210

three-dimensional position information acquisition module — 220

projecting module — 230

first area configuration module — 240

second information acquisition module — 250

second area configuration module — 260

**Fig. 7**

**Fig. 8**

**INTERNATIONAL SEARCH REPORT**

| International application No. |
| --- |
| **PCT/CN2018/112077** |

**A. CLASSIFICATION OF SUBJECT MATTER**

G01C 21/20(2006.01)i

According to International Patent Classification (IPC) or to both national classification and IPC

**B. FIELDS SEARCHED**

Minimum documentation searched (classification system followed by classification symbols)

G01C; G01S

Documentation searched other than minimum documentation to the extent that such documents are included in the fields searched

Electronic data base consulted during the international search (name of data base and, where practicable, search terms used)

CNABS, CNTXT, VEN, SIPOABS, CNKI, 无人机, 飞行器, 导航, 避障, 障碍, 定位, 深度图, 位置, 姿态, 位姿, 权重, 权值, 加权, UAV, unmanned aerial vehicle, navigate, location, position, obstacle, avoidance, depth, range, map, image, attitue, weight

**C. DOCUMENTS CONSIDERED TO BE RELEVANT**

| Category* | Citation of document, with indication, where appropriate, of the relevant passages | Relevant to claim No. |
| --- | --- | --- |
| Y | 陈宝华等 (CHEN, Baohua et al.). "基于即时稠密三维重构的无人机视觉定位 (Instant Dense 3D Reconstruction-Based UAV Vision Localization)" 电子学报 (ACTA Electronica Sinica), Vol. 45, No. (6), 30 June 2017 (2017-06-30), ISSN: 0372-2112, section 3 | 1-34 |
| Y | 杨维等 (YANG, Wei et al.). "基于RGB-D相机的无人机快速自主避障 (A Fast Autonomous Obstacle Avoidance Algorithm Based on RGB-D Camera)" 湖南工业大学学报 (Journal of Hunnan University of Technology), Vol. 29, No. (6), 30 November 2015 (2015-11-30), ISSN: 1673-9833, section 2 | 1-34 |
| A | CN 106931961 A (CHENGDU TOPPLUSVISION TECHNOLOGY CO., LTD.) 07 July 2017 (2017-07-07) entire document | 1-34 |
| A | CN 105571588 A (SAIDU TECHNOLOGY (BEIJING) CO., LTD.) 11 May 2016 (2016-05-11) entire document | 1-34 |

✓ Further documents are listed in the continuation of Box C.     ✓ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 December 2018** | **08 January 2019** |

| Name and mailing address of the ISA/CN | Authorized officer |
| --- | --- |
| **State Intellectual Property Office of the P. R. China (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**EP 3 702 731 A1**

<table>
<tr><td colspan="2"><strong>INTERNATIONAL SEARCH REPORT</strong></td><td>International application No.<br><strong>PCT/CN2018/112077</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 105910604 A (WUHAN ZHUOBA TECHNOLOGY CO., LTD.) 31 August 2016 (2016-08-31)<br>    entire document | 1-34 |
| A | CN 106595659 A (NANJING UNIVERSITY OF AERONAUTICS AND ASTRONAUTICS) 26 April 2017 (2017-04-26)<br>    entire document | 1-34 |
| A | EP 1975646 A2 (HONEYWELL INT. INC.) 01 October 2008 (2008-10-01)<br>    entire document | 1-34 |

Form PCT/ISA/210 (second sheet) (January 2015)

34

**INTERNATIONAL SEARCH REPORT**
Information on patent family members

International application No.

**PCT/CN2018/112077**

| Patent document cited in search report | | | Publication date (day/month/year) | Patent family member(s) | | | Publication date (day/month/year) |
|---|---|---|---|---|---|---|---|
| CN | 106931961 | A | 07 July 2017 | None | | | |
| CN | 105571588 | A | 11 May 2016 | None | | | |
| CN | 105910604 | A | 31 August 2016 | None | | | |
| CN | 106595659 | A | 26 April 2017 | None | | | |
| EP | 1975646 | A2 | 01 October 2008 | US | 2008239279 | A1 | 02 October 2008 |
| | | | | EP | 1975646 | A3 | 09 September 2009 |
| | | | | IL | 190493 | D0 | 29 December 2008 |
| | | | | US | 7463340 | B2 | 09 December 2008 |

Form PCT/ISA/210 (patent family annex) (January 2015)